# EUROPEAN PATENT SPECIFICATION

(11) **EP 2 807 244 B1**
(45) Date of publication and mention of the grant of the patent: **26.01.2022**
(21) Application number: 12703738.0
(22) Date of filing: 27.01.2012
(51) Int. Cl.: C11D 3/48, C11D 3/39, C11D 1/12, C11D 1/04, C11D 3/20

(54) **LOW TEMPERATURE SULFOPEROXYCARBOXYLIC ACID CONTAINING CLEANING COMPOSITION**
SULFOPEROXYCARBONSÄUREHALTIGE NIEDERTEMPERATUR-REINIGUNGSZUSAMMENSETZUNG
ACIDES SULFOPÉROXYCARBOXYLIQUES BASSE TEMPÉRATURE CONTENANT UNE COMPOSITION DE NETTOYAGE

(43) Date of publication of application: 03.12.2014
(73) Proprietor: Ecolab USA Inc., St. Paul, MN 55102 (US)
(72) Inventor: TIEKEMEIER, Julia, 40625 Düsseldorf (DE); VOGT, Petra, 40764 Langenfeld (DE); LI, Junzhong, Apple Valley, Minnesota 55124 (US); MCSHERRY, Dave, St. Paul, Minnesota 55118 (US)
(74) Representative: Godemeyer Blum Lenze Patentanwälte Partnerschaft mbB - werkpatent
(86) International application number: PCT/EP2012/051381
(87) International publication number: WO 2013/110349

(56) References cited:
- EP-A1- 0 378 064
- WO-A2-2009/118714
- WO-A2-2012/045364

## Description

### FIELD OF THE INVENTION

The present invention relates to compositions, methods of making and their use as cleaning composition, as antimicrobials and/or bleaching agent having improved storage stability and effective at lower concentration.

### BACKGROUND

Peroxycarboxylic acids are known for use as antimicrobials and bleaching agents. However, conventional peroxycarboxylic acids have inherent disadvantages of limited storage stability, and water solubility. Peroxycarboxylic acids compositions are not effective if low concentrated and/or used at lower temperatures. Further, most peroxycarboxylic acids have an unpleasant odor.

Clean in place (CIP) cleaning techniques are a specific cleaning and disinfection regimen adapted for removing soils from the internal components of tanks, lines, pumps and other process equipment used for processing typically liquid product streams such as beverages, milk, juices, etc. Clean in place cleaning involves passing cleaning solutions through the system without dismantling any system components. The minimum clean-in-place technique involves passing the cleaning solution through the equipment and then resuming normal processing.

Clean out of place systems (COP) cleaning techniques are a specific cleaning and disinfection regimen adapted for removing soils from interior and exterior surfaces of a wide variety of parts, such as ceramic surfaces, metal surfaces, walls in, wash tanks, soaking vessels, mop buckets, holding tanks, scrub sinks, vehicle parts washers, non-continuous batch washers and systems.

Often clean in place as well as clean out of place methods can involve a first rinse, the application of the cleaning solutions, and a second rinse with potable water followed by resumed operations. The process can also include any other contacting step in which a rinse, acidic or basic functional fluid, solvent or other cleaning component such as hot water, cold water, etc. can be contacted with the equipment at any step during the process. Often the final potable water rinse is skipped in order to prevent contamination of the equipment with bacteria following the cleaning and/or sanitizing step. Conventional clean in place as well as clean out of place methods require high temperatures, e.g., above 80° C. In production rooms, the elevated water temperature currently used for that kind of cleaning processes is in the range of 40° C to 60° C. Conventional clean in place techniques (CIP) as well as clean out of place techniques (COP) thus require the consumption of large amounts of energy.

Further cleaning compositions used in clean in place as well as clean out of place processes, in particular in the food and meat processing industry are non-foaming or low foaming liquid compositions. None foaming or low foaming cleaning compositions have the drawback that the soaking time on an upright tiled wall is short due to a good flow rate of the liquid cleaning composition.

Furthermore, none foaming or low foaming cleaning compositions have the drawback that the user cannot easily track the areas that are processed or not processed due to the brief residence time of the cleaning composition and low foam stability. There is a tendency that surfaces to be cleaned are treated twice thus require the consumption of large amounts of water and cleaning composition.

Also, compositions that are not storage stable, i.e. composition that have a tendency of phase separation have the disadvantage of a dramatically decreased antimicrobial effect. Further, compositions that shows phase separation have the drawback that at least some components of the more non-polar character precipitates on the treated surface so that residue remains.

Thus, a need exists for storage stable, i.e. a composition that shows no phase separation at storage, low or no odor, water-soluble peroxycarboxylic acid compounds and compositions that also possess antimicrobial and bleaching properties and being effective if low concentrated and/or used at lower temperatures. WO 2009/118714 A2 relates to sulfoperoxycarboxylic acid compounds, and methods for making and using them. Such sulfoperoxycarboxylic compounds are storage stable, water soluble and have low to no odor. The compounds can be formed from non-petroleum based renewable materials and can be used as antimicrobials, and bleaching agents.

EP 0 378 064 A1 relates to aqueous stable liquid bleaching compositions comprising a sulfone peroxycarboxylic acid, an anionic surfactant, a non-ionic surfactant and optionally a salt stabilizer.

### SUMMARY OF THE INVENTION

In some aspects, the present invention relates to storage stable sulfoperoxycarboxylic acids containing compositions, and methods for making them.

In some aspects, the present invention relates to low or no-foaming sulfoperoxycarboxylic acids containing compositions.

In some aspects, the present invention relates to storage stable sulfoperoxycarboxylic acids containing compositions that are phase stable, having low or no-odor, is effective at lower temperatures, and is water soluble.

In some aspects, the present invention provides methods for using the compositions of the present invention as cleaning, bleaching and/or antimicrobial agents.

In some aspects, the present invention provides methods for using the compositions of the present invention as low foaming cleaning agent, bleaching and/or antimicrobial agent for clean in place (CIP), for example of tanks, lines, pumps and other process equipment used for processing typically liquid product streams of beverages, in particular for cleaning milking machines.

In some aspects, the present invention provides methods for using the compositions of the present invention as low foaming cleaning agent, bleaching and/or antimicrobial agent for clean out of place (COP), for example from interior and exterior surfaces of a wide variety of parts, such as ceramic surfaces, metal surfaces, walls in, wash tanks, soaking vessels, mop buckets, holding tanks, scrub sinks, vehicle parts washers, non-continuous batch washers and systems.

In some aspects, the compositions of the present invention are suitable for use as low temperature bleaches and/or antimicrobial agent, e.g., at 40 degrees Celsius.

In some aspects, the compositions of the present invention are suitable for use as pH optimized peroxygen bleaches and/or antimicrobial agent in detergents.

In some aspects, the compositions of the present invention are suitable for use as cleaning composition that minimizes energy having excellent soil removal properties, preferably in the food, beverage and/or meat processing industry.

### DETAILED DESCRIPTION

The present invention relates to a liquid, storage stable composition comprising a mixture of:
a) a sulfoperoxycarboxylic acid,
b) a C₁ to C₄ percarboxylic acid,
c) a C₅ to C₁₀ percarboxylic acid,
d) a peroxide agent,
e) a hydrotrope,
f) an acidulant in an amount of > 0 wt.% to < 20 wt.% based on the total weight of the composition,
g) a liquid; wherein the composition comprises free sulfocarboxylic acid, free C₁ to C₄ carboxylic acid and free C₅ to C₁₀ carboxylic acid and is obtainable by mixing,
i) the peroxide agent, and ii) carboxylic acids of at least one sulfocarboxylic acid, at least one C1 to C4 carboxylic acid in an amount of > 5 wt.% to < 50 wt.% based on the total weight of the composition and at least one C5 to C10 carboxylic acid in an amount of > 0 wt.% to < 2 wt.% based on the total weight of the composition.

In some embodiments the liquid, storage stable composition can be preferably a concentrated solution. A concentrated solution has advantages in transporting and storing. The liquid, storage stable, concentrated composition can be further diluted, for example prior use, by admixing a solvent, preferably water.

In some embodiments the liquid, storage stable composition is obtained by mixing:
i) peroxide agent; and
ii) carboxylic acids of
   - at least one sulfocarboxylic acid,
   - at least one C₁ to C₄ carboxylic acid,
   - at least one C₅ to C₁₀ carboxylic acid;
at a weight.-% ratio of i) peroxide agent to ii) carboxylic acids of 1.0 : 0.15 to 1.0 : 1.2, preferably of 1.0 : 0.25 to 1.0 : 1.0, further preferred of 1.0 : 0.30 to 1.0 : 0.8, and additional preferred of 1.0 : 0.5 to 1.0 : 0.7.

In some other embodiments the liquid, storage stable composition comprises the acidulant, preferably sulfuric acid, in an amount of > 0 wt.-% to ≤ 20 wt.-%, preferably ≥ 0.002 wt.-% to ≤ 15 wt.-%, or ≥ 0.02 wt.-% to ≤ 12 wt.-%.

It should be understood that the aqueous cleaning composition of the invention can be free of at least one additive, preferably all additives, selected from the group of dye, color transfer inhibitor, anti-redeposition agents, optical brighteners, builder, oil and water repellant agents, color fastness agents, starch/sizing agents, fabric softening agents, fungicides, UV absorbers, thickeners, oxidizers, fragrances and/or mixtures thereof.

The composition of the present invention are low-odor, low foaming, water soluble, storage stable. Further, the composition may be effective at lower concentration. In addition, the composition may be effective at lower temperatures.

The compositions of the present invention have many uses including, but not limited to disinfection, bleaching, and/or cleaning.

So that the invention maybe more readily understood, certain terms are first defined.

As used herein, "storage stable" refers to a composition according to the invention, preferably in the form of a concentrated composition, that shows no phase separation at 40° C for a period of at least 7 days, and preferably the composition shows no phase separation at 40° C for a period of at least 12 days.

As used herein, "weight percent," "wt-%", "percent by weight", "% by weight", and variations thereof refer to the concentration of a component, substance or agent as the weight of that component, substance or agent divided by the total weight of the composition and multiplied by 100. It is understood that the total weight percent amount of all components, substances or agents of a composition are selected such that it does not exceed 100 wt.-%.

It is understood that, as used here, "percent", "%" are intended to be synonymous with "weight percent", "wt-%", etc..

As used herein, the phrases "objectionable odor", "offensive odor", or "malodor", refer to a sharp, pungent, or acrid odor or atmospheric environment from which a typical person withdraws if they are able to. Hedonic tone provides a measure of the degree to which an odor is pleasant or unpleasant. An "objectionable odor", "offensive odor", or "malodor" has an hedonic tone rating it as unpleasant as or more unpleasant than a solution of 5 wt-% acetic acid, propionic acid, butyric acid, or mixtures thereof.

As used herein, the term "microorganism" refers to any non-cellular or unicellular (including colonial) organism.

Microorganisms include all prokaryotes. Microorganisms include bacteria (including cyanobacteria), spores, lichens, fungi, protozoa, virinos, viroids, viruses, phages, and some algae.

As used herein, the term "microbe" is synonymous with microorganism.

As used herein, the phrase "food product" includes any food substance that might require treatment with an antimicrobial agent or composition and that is edible with or without further preparation. Food products include beverages, e.g. non-alcoholic beverages, e.g. milk, fruit based beverages, alcoholic beverages, e.g. beer, meat, e.g. red meat and pork, seafood, poultry, produce (e.g., fruits and vegetables), eggs, living eggs, egg products, ready to eat food, wheat, seeds, roots, tubers, leafs, stems, corns, flowers, sprouts, seasonings, or a combination thereof.

As used herein, the term "cleaning" refers to a method or process used to facilitate or aid in soil removal, bleaching, microbial population reduction, and any combination thereof. The methods, and compositions of the present invention can include, consist essentially of, or consist of the steps, and ingredients of the present invention as well as other ingredients described herein.

As used herein, "consisting essentially of' means that the methods, and compositions may include additional steps, or ingredients, but only if the additional steps, or ingredients do not materially alter the basic and novel characteristics of the claimed methods, and compositions.

The term "produce" refers to food products such as fruits and vegetables and plants or plant-derived materials that are typically sold uncooked and, often, unpackaged, and that can sometimes be eaten raw.

As used herein, the phrase "plant" or "plant product" includes any plant substance or plant-derived substance. Plant products include, but are not limited to, seeds, nuts, nut meats, cut flowers, plants or crops grown or stored in a greenhouse, house plants. Plant products include many animal feeds.

As used herein, the phrase "meat product" refers to all forms of animal flesh, including the carcass, muscle, fat, organs, skin, bones and body fluids and like components that form the animal. Animal flesh includes, but is not limited to, the flesh of mammals, birds, fishes, reptiles, amphibians, snails, clams, crustaceans, other edible species such as lobster, crab, etc., or other forms of seafood. The forms of animal flesh include, for example, the whole or part of animal flesh, alone or in combination with other ingredients. Typical forms include, for example, processed meats such as cured meats, sectioned and formed products, minced products, finely chopped products, ground meat and products including ground meat, whole products.

As used herein the term "poultry" refers to all forms of any bird kept, harvested, or domesticated for meat or eggs, and including chicken, turkey, ostrich, game hen, squab, guinea fowl, pheasant, quail, duck, goose, emu and the eggs of these birds.

Poultry includes whole, sectioned, processed, cooked or raw poultry, and encompasses all forms of poultry flesh, by-products, and side products. The flesh of poultry includes muscle, fat, organs, skin, bones and body fluids and like components that form the animal.

Forms of animal flesh include, for example, the whole or part ofanimal flesh, alone or in combination with other ingredients. Typical forms include, for example, processed poultry meat, such as cured poultry meat, sectioned and formed products, minced products, finely chopped products and whole products.

As used herein, the phrase "poultry debris" refers to any debris, residue, material, dirt, offal, poultry part, poultry waste, poultry viscera, poultry organ, fragments or combinations of such materials removed from a poultry carcass or portion during processing and that enters a waste stream.

As used herein, the term "surface" refers to a surface of a tool, a machine, equipment, a structure, a building that is employed as part of a food processing, preparation, or storage activity. Examples of food processing surfaces include surfaces of food processing or preparation equipment, e.g., slicing, canning, or transport equipment, including flumes, of food processing wares, e.g., utensils, dishware, wash ware, and bar glasses), and of floors, walls, or fixtures of structures in which food processing occurs. Food processing surfaces are found and employed in milking machines, food anti-spoilage air circulation systems, aseptic packaging sanitizing, food refrigeration and cooler cleaners and sanitizers, ware washing sanitizing, blancher cleaning and sanitizing, food packaging materials, cutting board additives, third-sink sanitizing, beverage chillers and warmers, meat chilling or scalding waters, auto dish sanitizers, sanitizing gels, cooling towers, food processing antimicrobial garment sprays, and non-to-low-aqueous food preparation lubricants, oils, and rinse additives.

As used herein, the term "ware" refers to items such as eating and cooking utensils, dishes, and other hard surfaces such as showers, sinks, toilets, bathtubs, countertops, windows, mirrors, transportation vehicles, and floors.

As used herein, the term "warewashing" refers to washing, cleaning, or rinsing ware. Ware also refers to items made of plastic. Types of plastics that can be cleaned with the compositions according to the invention include but are not limited to, those that include polycarbonate polymers (PC), acrilonitrile-butadiene-styrene polymers (ABS), and polysulfone polymers (PS). Another exemplary plastic that can be cleaned using the compounds and compositions of the invention include polyethylene terephthalate (PET). As used herein, the phrase "air streams" includes food anti-spoilage air circulation systems.

Air streams also include air streams typically encountered in hospital, surgical, infirmity, birthing, mortuary, and clinical diagnosis rooms.

As used herein, the term "waters" includes food process waters or transport waters. Food process waters or transport waters include produce transport waters (e.g., as found in flumes, pipe transports, cutters, slicers, blanchers, retort systems, washers), belt sprays for food transport lines, boot and hand-wash dip-pans, third-sink rinse waters.

Waters also include domestic and recreational waters such as pools, spas, recreational flumes and water slides, fountains. As used herein, the phrase "health care surface" refers to a surface of an instrument, a device, a cart, a cage, furniture, a structure, a buildingthat is employed as part of a health care activity. Examples of health care surfaces include surfaces of medical or dental instruments, of medical or dental devices, of electronic apparatus employed for monitoring patient health, and of floors, walls, or fixtures of structures in which health care occurs. Health care surfaces are found in hospital, surgical, infirmity, birthing, mortuary, and clinical diagnosis rooms. These surfaces can be those typified as "hard surfaces" (such as walls, floors, bed-pans, etc.,), or fabric surfaces, e.g., knit, woven, and nonwoven surfaces (such as surgical garments, draperies, bed linens, bandages, etc.,), or patient-care equipment (such as respirators, diagnostic equipment, shunts, body scopes, wheel chairs, beds, etc.,), or surgical and diagnostic equipment. Health care surfaces include articles and surfaces employed in animal health care.

As used herein, the term ,,instrument" refers to the various medical or dental instruments or devices that can benefit from cleaning with a composition according to the present invention.

As used herein, the phrases "medical instrument," "dental instrument," "medical device," "dental device," "medical equipment," or "dental equipment" refer to instruments, devices, tools, appliances, apparatus, and equipment used in medicine or dentistry.

Such instruments, devices, and equipment can be cold sterilized, soaked or washed and then heat sterilized, or otherwise benefit from cleaning in a composition of the present invention. These various instruments, devices and equipment include, but are not limited to: diagnostic instruments, trays, pans, holders, racks, forceps, scissors, shears, saws (e.g. bone saws and their blades), hemostats, knives, chisels, rongeurs, files, nippers, drills, drill bits, rasps, burrs, spreaders, breakers, elevators, clamps, needle holders, carriers, clips, hooks, gouges, curettes, retractors, straightener, punches, extractors, scoops, keratomes, spatulas, expressors, trocars, dilators, cages, glassware, tubing, catheters, cannulas, plugs, stents, scopes (e.g., endoscopes, stethoscopes, and arthoscopes) and related equipment, or combinations thereof.

As used herein, "agri cultural" or "veterinary" objects or surfaces include animal milking machines, animal feeds, animal watering stations and enclosures, animal quarters, animal veterinarian clinics (e.g. surgical or treatment areas), animal surgical areas.

In some aspects, the present invention relates to compositions and methods for removing soils from surfaces to be cleaned. Surfaces to be cleaned are hard and/or soft surfaces. In some embodiments, the composition of the invention is applied in a clean in place process (CIP) and/or in a clean out of place process (COP). In other embodiments, the compositions of the invention may be manually applied to the surface to be cleaned. In particular the compositions of the invention can be used in the beverage and food processing industry, such as milk processing or meat processing industry, for cleaning purposes.

In some aspects, the methods and compositions of the present invention may be applied to equipment generally cleaned using clean in place cleaning procedures. Examples of such equipment include evaporators, heat exchangers (including tube-in-tube exchangers, direct steam injection, and plate-in-frame exchangers), heating coils (including steam, flame or heat transfer fluid heated) re-crystallizers, pan crystallizers, spray dryers, drum dryers, and tanks.

The methods and compositions of the present invention may be used in any application where soils, i.e., caked on soils or burned on soils, such as proteins or carbohydrates, need to be removed. As used herein, the term "burned on soil" or "thermally degraded soil" refers to a soil or soils that have been exposed to heat and as a result have become baked on to the surface to be cleaned. Exemplary thermally degraded soils include food soils that have been heated during processing, e.g., dairy products heated on pasteurizers, fructose, or corn syrup.

The methods and compositions of the present invention may also be used to remove other non-thermally degraded soils that are not easily removed using conventional cleaning techniques, in particular for milking machines. Soil types suited to cleaning with the methods of the present invention include, but are not limited to, milk, starch, cellulosic fiber, protein, simple carbohydrates and combinations of any of these soil types with mineral complexes. Examples of specific food soils that are effectively removed using the methods of the present invention include, but are not limited to, milk residues, meat residues, blood residues, protein residues, vegetable and fruit juices, brewing and fermentation residues, soils generated in sugar beet and cane processing, and soils generated in condiment and sauce manufacture, e.g., ketchup, tomato sauce, barbeque sauce. These soils can develop on heat exchange equipment surfaces and on other surfaces during the manufacturing and packaging process.

Exemplary industries in which the methods and compositions of the present invention can be used include, but are not limited to: the food and beverage industry, e.g., the milk machine, milk processing industry, meat processing industry; dairy, cheese, sugar, and brewery industries, e.g. milk; oil processing industry; industrial agriculture and ethanol processing; and the pharmaceutical manufacturing industry.

As used herein, the term "sanitizer" refers to an agent that reduces the number of bacterial contaminants to safe levels as judged by public health requirements.

In an embodiment, sanitizers for use in this invention will provide at least a 99.999% reduction (5-log order reduction). These reductions can be evaluated using a procedure set out in Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2). According tothis reference a sanitizer should provide a 99.999% reduction (5-log order reduction) within 30 seconds at room temperature, 252.deg.C, against several test organisms.

As used herein, the term "disinfectant" refers to an agent that kills all vegetative cells including most recognized pathogenic microorganisms, using the procedure described in A. O. A. C. Use Dilution Methods, Official Methods of Analysis of the Association of Official Analytical Chemists, paragraph 955.14 and applicable sections, 15th Edition, 1990 (EPA Guideline 91-2). As used herein, the term "high level disinfection" or "high level disinfectant" refers to a compound or composition that kills substantially all organisms, except high levels of bacterial spores, and is effected with a chemical germicide cleared for marketing as a sterilant by the Food and Drug Administration. As used herein, the term "intermediate-level disinfection" or ,,intermediate level disinfectant" refers to a compound or composition that kills mycobacteria, most viruses, and bacteria with a chemical germicide registered as a tuberculocide by the Environmental Protection Agency (EPA). As used herein, the term "low-level disinfection" or "low level disinfectant" refers to a compound or composition that kills some viruses and bacteria with a chemical germicide registered as a hospital disinfectant by the EPA.

As used in this invention, the term "sporicide" refers to a physical or chemical agent or process having the ability to cause greater than a 90% reduction (1-log order reduction) in the population of spores of Bacillus cereus or Bacillus subtilis within 10 seconds at 60.deg. C. In certain embodiments, the sporicidal compositions of the invention provide greater than a 99% reduction (2-log order reduction), greater than a 99.99% reduction (4-log order reduction), or greater than a 99.999% reduction (5-log order reduction) in such population within 10 seconds at 60.deg. C. Differentiation of antimicrobial ,,-cidal" or ,,-static" activity, the definitions which describe the degree of efficacy, and the official laboratory protocols for measuring this efficacy are considerations for understanding the relevance of antimicrobial agents and compositions. Antimicrobial compositions can effect two kinds of microbial cell damage. The first is a lethal, irreversible action resulting in complete microbial cell destruction or incapacitation. The second type of cell damageis reversible, such that if the organism is rendered free of the agent, it can again multiply. The former is termed microbiocidal and the later, microbistatic. A sanitizer and a disinfectant are, by definition, agents which provide antimicrobial or microbiocidal activity. In contrast, a preservative is generally described as an inhibitor or microbistatic composition

Larger reductions in microbial population provide greater levels of protection.

### Compounds of the Invention

The present invention relates, at least in part, to sulfocarboxylic acid and sulfoperoxycarboxylic acid containing compositions and the use thereof in a variety of bleaching, disinfecting and cleaning applications.

As used herein, the term "sulfoperoxycarboxylic acid" or "sulfonated peroxycarboxylic acid" refers to the peroxycarboxylic acid obtained by oxidizing of the corresponding sulfonated carboxylic acid.

In some embodiments, compositions of the present invention can include one or more of the sulfoperoxycarboxylic acids of the present invention.

Sulfoperoxycarboxylic acid that may be suitable to use having the general Formula I:

R₁-CH(SO₃⁻X⁺)-R₂-COOOH

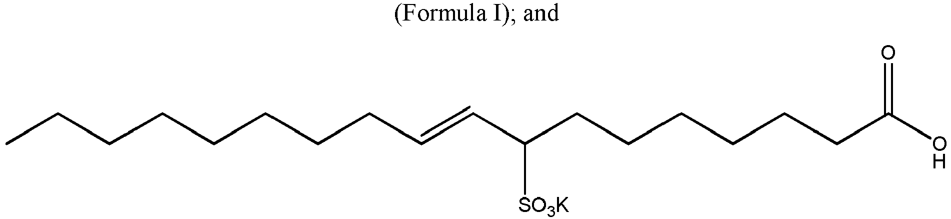

sulfocarboxylic acid that may be suitable to use having the general Formula II:

R₁-CH(SO₃⁻X⁺)-R₂-COOH (Formula II);

wherein:
R₁ is hydrogen, or a substituted or unsubstituted Cₘ alkyl group, for example CH₃-(CH)₇-C=C-, preferably hydrogen;
R₂ is hydrogen, or a substituted or unsubstituted Cₙ alkyl group, for example -(CH₂)₆-, preferably hydrogen;
X is hydrogen (H⁺), a cationic group, such as Na⁺, K⁺, or an ester-forming moiety, preferably H⁺;
m is 1 to 10, preferably 8 to 10;
n is 1 to 10; preferably 6 to 8; and
m+n is less than or equal to 18, or salts or esters thereof. According to a preferred embodiment the sulfoperoxycarboxylic acid is CH₃-(CH)₇-C=C-CH(S0₃⁻X⁺)-(CH₂)₆-COOOH and the sulfocarboxylic acid is CH₃-(CH)₇-C=C-CH(SO₃⁻X⁺)-(CH₂)₆-COOH.

As used herein, the term "alkyl" or "alkyl groups" refers to saturated hydrocarbons having one or more carbon atoms, including straight-chain alkyl groups (e.g., methyl, ethyl, propyl, butyl, pentyl, hexyl, heptyl, octyl, nonyl, decyl, etc.), cyclic alkyl groups (or "cycloalkyl" or "alicyclic" or "carbocyclic" groups) (e.g., cyclopropyl, cyclopentyl, cyclohexyl, cycloheptyl, cyclooctyl, etc.), branched-chain alkyl groups (e.g., isopropyl, tert-butyl, sec-butyl, isobutyl, etc.), and alkyl-substituted alkyl groups (e.g., alkyl-substituted cycloalkyl groups and cycloalkyl-substituted alkyl groups).

Unless otherwise specified, the term "alkyl" includes both "unsubstituted alkyls" and "substituted alkyls." As used herein, the term ,,substituted alkyls" refers to alkyl groups having substituents replacing one or more hydrogens on one or more carbons of the hydrocarbon backbone.

Such substituents may include, for example, alkenyl, alkynyl, halogeno, hydroxyl, alkylcarbonyloxy, arylcarbonyloxy, alkoxycarbonyloxy, aryloxy, aryloxycarbonyloxy, carboxylate, alkylcarbonyl, arylcarbonyl, alkoxycarbonyl, aminocarbonyl, alkylaminocarbonyl, dialkylaminocarbonyl, alkylthiocarbonyl, alkoxyl, phosphate, phosphonato, phosphinato, cyano, amino (including alkyl amino, dialkylamino, arylamino, diarylamino, and alkylarylamino), acylamino (including alkylcarbonylamino, arylcarbonylamino, carbamoyl and ureido), imino, sulfhydryl, alkylthio, arylthio, thiocarboxylate, sulfates, alkylsulfinyl, sulfonates, sulfamoyl, sulfonamido, nitro, trifiuoromethyl, cyano, azido, heterocyclic, alkylaryl, or aromatic (including heteroaromatic) groups.

In some embodiments, substituted alkyls can include a heterocyclic group.

As used herein, the term ,,heterocyclic group" includes closed ring structures analogous to carbocyclic groups in which one or more of the carbon atoms in the ring is an element other than carbon, for example, nitrogen, sulfur or oxygen.

Heterocyclic groups may be saturated or unsaturated. Exemplary heterocyclic groups include, but are not limited to, aziridine, ethylene oxide (epoxides, oxiranes), thiirane (episulfides), dioxirane, azetidine, oxetane, thietane, dioxetane, dithietane, dithiete, azolidine, pyrrolidine, pyrroline, oxolane, dihydrofuran, and furan.

Sulfoperoxycarboxylic acid obtained from oxidizing sulfocarboxylic compounds that can be suitable used according to the present invention are disclosed in WO 2009/118714 A2.

In table I sulfocarboxylic acids and sulfoperoxycarboxylic acids are shown that may be suitable used for compositions of the invention:

**Table I**

| | |
|---|---|
| sulfocarboxylic acids | sulfoperoxycarboxylic acids |
| 9,10-Dihydroxy-9-sulfooctadecanoic acid | 9,10-Dihydroxy-9-sulfooctadecaneperoxoic acid |
| 10-Hydroxy-9-sulfooctadecanoic acid | 10-Hydroxy-9-sulfooctadecaneperoxoic acid |
| 9-Sulfooctadecanoic acid | 9-Sulfooctadecaneperoxoic acid |
| 11-Sulfoundecanoic acid | 11-Sulfoundecaneperoxoic acid |
| 10,11-Disulfoundecanoic acid | 10,11-Disulfoundecaneperoxoic acid |
| 8-(3-octyloxiran-2-yl)-8-sulfooctanoic acid | 8-(3-octyloxiran-2-yl)-8-sulfooctaneperoxoic acid |
| 9,10-Dihydroxy-11-sulfooctadecanoic acid | 9, 1 0-Dihydroxy-11-sulfooctadecaneperoxoic acid |
| 8-(3-octyloxiran-2-yl)-11-sulfooctanoic acid | 8-(3-octyloxiran-2-yl)-11-sulfooctaneperoxoic acid |
| 9-Hydroxy-10-sulfooctadecanoic acid | 9-Hydroxy-10-sulfooctadecaneperoxoic acid |
| 10-Sulfooctadecanoic acid | 10-Sulfooctadecaneperoxoic acid |
| 9,10-Disulfooctadecanoic acid | 9,10-Disulfooctadecaneperoxoic acid |
| 10-Sulfoundecanoic acid | 10-Sulfoundecaneperoxoic acid |
| 9-(3-heptyloxiran-2-yl)-9-sulfononoic acid | 9-(3-heptyloxiran-2-yl)-9-sulfononaneperoxoic acid |
| 10,11-Dihydroxy-9-sulfooctadecanoic acid | 10,11-Dihydroxy-9-sulfooctadecaneperoxoic acid |
| 8,9-Dihydroxy-10-sulfooctadecanoic acid | 8,9-Dihydroxy-10-sulfooctadecaneperoxoic acid |

In some embodiments the sulfonated fatty acid of the composition of the invention can be oleic acid.

### C₁ to C₄ percarboxylic acid

In some embodiments, compositions for use with the methods of the present invention may include at least one C₁ to C₄ percarboxylic acid. Examples of suitable C₁ to C₄ percarboxylic acid include, but are not limited to peroxyformic, peroxyacetic, peroxypropionic, and/or peroxybutanoic acid as well as their branched isomers, for example peroxylactic acid, peroxymaleic acid, and/or peroxyhydroxyacetic acid. However, in some embodiments peroxyacetic acid may be preferred.

In some embodiments, the amount of C₁ to C₄ percarboxylic acid of a concentrated composition may be ≥ 2.5 wt.-% to ≤ 16.5 wt.-%, preferably ≥ 5 wt.-% to ≤ 15 wt.-%, or ≥ 7.5 wt.-% to ≤ 10 wt.-%.

### C₁ to C₄ carboxylic acid

In some embodiments, compositions for use with the methods of the present invention may include at least one C₁ to C₄ carboxylic acid. Examples of suitable C₁ to C₄ carboxylic acid include, but are not limited to formic, acetic, propionic and/or butanoic acid as well as their branched isomers, for example lactic acid, maleic acid, and/or hydroxyacetic acid. However, in some embodiments acetic acid may be preferred.

The amount of C₁ to C₄ carboxylic acid of a concentrated composition is ≥ 5 wt.-% to ≤ 50 wt.-%, preferably ≥ 6 wt.-% to ≤ 20 wt.-%, or ≥ 7 wt.-% to ≤ 15 wt.-%.

In some embodiments, the composition comprises the C₁ to C₄ percarboxylic acid, preferably peracetic acid, in an amount of > 5 wt.-% to ≤ 16.5 wt.-%, preferably ≥ 5 wt.-% to ≤ 15 wt.-%, or ≥ 7.5 wt.-% to ≤ 10 wt.-%, based on the total weight of the composition; and/or C₁ to C₄ carboxylic acid, preferably acetic acid, in an amount of > 5 wt.-% to ≤ 50 wt.- %, preferably ≥ 6 wt.-% to ≤ 20 wt.-%, or ≥ 7 wt.-% to ≤ 15 wt.-%, based on the total weight of the composition; and preferably a mixture of a C₁ to C₄ peracetic acid and C₁ to C₄ carboxylic acid, preferably a mixture of peracetic acid and acetic acid, in an amount of > 7.5 wt.-% to ≤ 66.5 wt.-%, preferably ≥ 11 wt.-% to ≤ 35 wt.-%, or ≥ 14.5 wt.-% to ≤ 25 wt.-%, based on the total weight of the composition.

### C₅ to C₁₀ percarboxylic acid

In some embodiments, compositions for use with the methods of the present invention may include at least one C₅ to C₁₀ percarboxylic acid. Examples of suitable C₅ to C₁₀ percarboxylic acids include, but are not limited to peroxypentanoic acid, peroxyhexanoic acid, peroxyheptanoic acid, peroxyoctanoic acid, peroxynonanoic acid, and/or peroxydecanoic acid as well as their branched isomers, for example peroxyascorbic acid, peroxycitric acid, peroxyneopentanoic acid, peroxyneoheptanoic acid, peroxyneodecanoic acid, peroxyoxalic acid, peroxymalonic acid, peroxysuccinic acid, peroxyglutaric acid, peroxyadipic acid, peroxypimelic acid, and/or peroxysuberic acid, and mixtures thereof. However, in some embodiments peroxyoctanoic acid may be preferred.

In some embodiments, the amount of C₅ to C₁₀ percarboxylic acid of a concentrated composition may be ≥ 0 wt.-% to ≤ 2 wt.-%, preferably ≥ 0.1 wt.-% to ≤ 1.2 wt.-%, or ≥ 0.2 wt.-% to ≤ 0.8 wt.-%.

In some other embodiments the liquid, storage stable composition comprises the C₅ to C₁₀ carboxylic acid, preferably octanoic acid, in an amount of ≥ 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition.

According to a further embodiment the liquid, storage stable composition comprises the C₅ to C₁₀ carboxylic acid, preferably octanoic acid, in an amount of ≥ 0.05 wt.-% to ≤ 2 wt.-%, preferably ≥ 0. 1 wt.-% to ≤ 2 wt.-%, further preferred ≥ 0.2 wt.-% to ≤ 2 wt.-%, more preferred ≥ 0.3 wt.-% to ≤ 1.5 wt.-%, in addition preferred ≥ 0.4 wt.-% to ≤ 1.25 wt.-%, especially preferred ≥ 0.45 wt.-% to ≤ 1 wt.-%, or also preferred ≥ 0.5 wt.-% to ≤ 0.8 wt.-%, based on the total weight of the composition; and/or C₅ to C₁₀ carboxylic acid, preferably octanoic acid, in an amount of ≥ 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition.

### C₅ to C₁₀ carboxylic acid

In some embodiments, compositions for use with the methods of the present invention may include at least one C₅ to C₁₀ carboxylic acid. Examples of suitable C₅ to C₁₀ carboxylic acids include, but are not limited to pentanoic acid, hexanoic acid, heptanoic acid, octanoic acid, nonanoic acid, and/or decanoic acid as well as their branched isomers, for example ascorbic acid, citric acid, neopentanoic acid, neoheptanoic acid, neodecanoic acid, oxalic acid, malonic acid, succinic acid, glutaric acid, adipic acid, pimelic acid, and/or suberic acid, and mixtures thereof. However, in some embodiments octanoic acid may be preferred.

The amount of C₅ to C₁₀ carboxylic acid of a concentrated composition is ≥ 0 wt.-% to ≤ 2 wt.-%, preferably ≥ 0.1 wt.-% to ≤ 2 wt.-%, or ≥ 0.5 wt.-% to ≤ 2 wt.-%.

In some other embodiments the liquid, storage stable composition comprises the C₅ to C₁₀ percarboxylic acid, preferably peroctanoic acid, in an amount of ≥ 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition.

According to a further embodiment the liquid, storage stable composition comprises the C₅ to C₁₀ percarboxylic acid, preferably peroctanoic acid, in an amount of ≥ 0.05 wt.-% to ≤ 3 wt.-%, preferably ≥ 0. 1 wt.-% to ≤ 2.5 wt.-%, further preferred ≥ 0.2 wt.-% to ≤ 2 wt.-%, more preferred ≥ 0.3 wt.-% to ≤ 1.5 wt.-%, in addition preferred ≥ 0.4 wt.-% to ≤ 1.25 wt.-%, especially preferred ≥ 0.45 wt.-% to ≤ 1 wt.-%, or also preferred ≥ 0.5 wt.-% to ≤ 0.8 wt.-%, based on the total weight of the composition.

According to another embodiment the liquid, storage stable composition comprises a mixture of a C₅ to C₁₀ percarboxylic acid and C₅ to C₁₀ carboxylic acid, preferably a mixture of a peroctanoic acid and an octanoic acid, in an amount of ≥ 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition.

According to a further embodiment the liquid, storage stable composition comprises mixture of a C₅ to C₁₀ percarboxylic acid and C₅ to C₁₀ carboxylic acid, preferably a mixture of a peroctanoic acid and an octanoic acid, in an amount of ≥ 0.05 wt.-% to ≤ 3 wt.-%, preferably ≥ 0. 1 wt.-% to ≤ 2.5 wt.-%, further preferred ≥ 0.2 wt.-% to ≤ 2 wt.-%, more preferred ≥ 0.3 wt.-% to ≤ 1.5 wt.-%, in addition preferred ≥ 0.4 wt.-% to ≤ 1.25 wt.-%, especially preferred ≥ 0.45 wt.-% to ≤ 1 wt.-%, or also preferred ≥ 0.5 wt.-% to ≤ 0.8 wt.-%, based on the total weight of the composition.

According to a further embodiment the liquid, storage stable composition comprises the C₅ to C₁₀ percarboxylic acid, preferably peroctanoic acid, in an amount of > 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition; and/or C₅ to C₁₀ carboxylic acid, preferably octanoic acid, in an amount of > 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition; and preferably a mixture of a C₅ to C₁₀ percarboxylic acid and C₅ to C₁₀ carboxylic acid, preferably a mixture of peroctanoic acid and octanoic acid, in an amount of > 0 wt.-% to ≤ 2 wt.-%, preferably ≥ 0.0001 wt.-% to ≤ 1.2 wt.-%, or ≥ 0.001 wt.-% to ≤ 0.8 wt.-%, based on the total weight of the composition, and/or wherein the composition comprises the C₁ to C₄ percarboxylic acid, preferably peracetic acid, in an amount of > 2.5 wt.-% to ≤ 16.5 wt.-%, preferably ≥ 5 wt.-% to ≤ 15 wt.-%, or ≥ 7.5 wt.-% to ≤ 10 wt.-%, based on the total weight of the composition; and/or C₁ to C₄ carboxylic acid, preferably acetic acid, in an amount of > 5 wt.-% to ≤ 50 wt.-%, preferably ≥ 6 wt.-% to ≤ 20 wt.-%, or ≥ 7 wt.-% to ≤ 15 wt.-%, based on the total weight of the composition; and preferably a mixture of a C₁ to C₄ peracetic acid and C₁ to C₄ carboxylic acid, preferably a mixture of peracetic acid and acetic acid, in an amount of > 7.5 wt.-% to ≤ 66.5 wt.-%, preferably ≥ 11 wt.-% to ≤ 35 wt.-%, or ≥ 14.5 wt.-% to ≤ 25 wt.-%, based on the total weight of the composition.

### Peroxide agent

In some embodiments, the peroxide agent - also referred to active oxygen source herein - includes at least one peroxygen compound. Exemplary peroxygen compounds for use in the composition of the present invention include hydrogen peroxide, a perborate, a percarbonate and mixtures and derivatives thereof, and preferably hydrogen peroxide. In some embodiments, the active oxygen source includes hydrogen peroxide.

### Acidulant

In some embodiments, compositions for use with the methods of the present invention may include at least one acidulant. The acidulant can be selected from the group consisting of sulfuric acid, caprylic acid, sodium bisulfate, nitric acid, hydrochloric acid, methane sulfonic acid, ethane sulfonic acid, propane sulfonic acid, butane sulfonic acid, formic acid, acetic acid, halocarboxylic acids, picolinic acid, dipicolinic acid, and mixtures thereof, and preferably sulfuric acid.

The amount of acidulant of a concentrated composition is ≥ 2 wt.-% to ≤ 20 wt.-%, preferably ≥ 5 wt.-% to ≤ 15 wt.-%, or ≥ 10 wt.-% to ≤ 12 wt.-%.

### Hydrotropes

In addition, various other additives or adjuvants may be present in compositions of the present invention to provide additional desired properties, either of form, functional or aesthetic nature, for example:
a) Solubilizing intermediaries called hydrotropes may be present in the compositions of the invention of such as an aromatic hydrocarbon sulfonate, preferably xylene-, toluene-, or cumene sulfonate; or n-octane sulfonate; or their sodium-, potassium- or ammonium salts or as salts of organic ammonium bases. Also commonly used are polyols containing only carbon, hydrogen and oxygen atoms. They preferably contain from 2 to 6 carbon atoms and from 2 to 6 hydroxy groups. Examples include 1,2-propanediol, 1,2-butanediol, hexylene glycol, glycerol, sorbitol, mannitol, and glucose.
b) Nonaqueous liquid carriers or solvents may be used for varying compositions of the present invention.
c) Viscosity modifiers may be added to the compositions of the present invention.

These may include natural polysaccharides such as xanthan gum, carrageenan; or cellulosic type thickeners such as carboxymethyl cellulose, and hydroxymethyl-, hydroxyethyl-, and hydroxypropyl cellulose; or, polycarboxylate thickeners such as high molecular weight polyacrylates or carboxyvinyl polymers and copolymers; or, naturally occurring and synthetic clays; and finely divided fumed or precipitated silica, to list a few. In some embodiments, the compositions for use with the methods of the present invention do not include a gelling agent.

In some preferred embodiments the hydrotrope may be selected from the group comprising of a xylene-, toluene-, or cumene sulfonate, n-octane sulfonate, and/or acids thereof and more preferred cumene sulfonate.

In some embodiments, the amount of hydrotrope of a concentrated composition may be ≥ 5 wt.-% to ≤ 20 wt.-%, preferably ≥ 7 wt.-% to ≤ 18 wt.-%, or ≥ 10 wt.-% to ≤ 15 wt.- %.

### Builders

In some embodiments, compositions for use with the methods of the present invention may include a builder or builders. Builders include chelating agents (chelators), sequestering agents (sequestrants), detergent builders. The builder often stabilizes the composition or solution. In some embodiments, builders suitable for use with the methods of the present invention preferably do not complex with the activator complex. That is, the builder or builders for use with the present invention are selected such that they preferentially complex with the mineral soil broken up after the oxygen gas has been generated in situ on and in the soil, rather than with the activator complex.

Builders and builder salts may be inorganic or organic. Examples of builders suitable for use with the methods of the present invention include, but are not limited to, phosphonic acids and phosphonates, phosphates, aminocarboxylates and their derivatives, pyrophosphates, polyphosphates, ethylenediamene and ethylenetriamene derivatives, hydroxyacids, and mono-, di-, and tri-carboxylates and their corresponding acids. Other builders include aluminosilicates, nitroloacetates and their derivatives, and mixtures thereof. Still other builders include aminocarboxylates, including salts of hydroxyethylenediaminetetraacetic acid (HEDTA), and diethylenetriaminepentaacetic acid.

Exemplary commercially available chelating agents for use with the methods of the present invention include, but are not limited to: sodium tripolyphosphate available from Innophos; Trilon A^{®} available from BASF; Versene 100^{®}, Low NTA Versene ^{®}, Versene Powder^{®}, and Versenol 120^{®} all available from Dow; Dissolvine D-40 available from BASF; and sodium citrate.

In some embodiments, a biodegradable aminocarboxylate or derivative thereof is present as a builder in the methods of the present invention. Exemplary biodegradable aminocarboxylates include, but are not limited to: Dissolvine GL-38^{®} and Dissolvine GL-74 ^{®} both available from Akzo; Trilon M^{®} available from BASF; Baypure CX100^{®} available from Bayer; Versene EDG^{®} available from Dow; HIDS^{®} available from Nippon Shakubai; Octaquest E30^{®} and Octaquest A65^{®} both available from Finetex/Innospec Octel.

In some embodiments, an organic chelating agent may be used. Organic chelating agents include both polymeric and small molecule chelating agents. Organic small molecule chelating agents are typically organocarboxylate compounds or organophosphate chelating agents. Polymeric chelating agents commonly include polyanionic compositions such as polyacrylic acid compounds. Small molecule organic chelating agents include N-hydroxyethylenediaminetriacetic acid (HEDTA), ethylenediaminetetraacetic acid (EDTA), nitrilotriaacetic acid (NTA), diethylenetriaminepentaacetic acid (DTPA), ethylenediaminetetraproprionic acid triethylenetetraaminehexaacetic acid (TTHA), and the respective alkali metal, ammonium and substituted ammonium salts thereof. Aminophosphonates are also suitable for use as chelating agents with the methods of the invention and include ethylenediaminetetramethylene phosphonates, nitrilotrismethylene phosphonates, and diethylenetriamine-(pentamethylene phosphonate) for example. These aminophosphonates commonly contain alkyl or alkenyl groups with less than 8 carbon atoms.

Other suitable sequestrants include water soluble polycarboxylate polymers. Such homopolymeric and copolymeric chelating agents include polymeric compositions with pendant (-CO₂H) carboxylic acid groups and include polyacrylic acid, polymethacrylic acid, polymaleic acid, acrylic acid-methacrylic acid copolymers, acrylic-maleic copolymers, hydrolyzed polyacrylamide, hydrolyzed methacrylamide, hydrolyzed acrylamidemethacrylamide copolymers, hydrolyzed polyacrylonitrile, hydrolyzed polymethacrylonitrile, hydrolyzed acrylonitrile methacrylonitrile copolymers, or mixtures thereof. Water soluble salts or partial salts of these polymers or copolymers such as their respective alkali metal (for example, sodium or potassium) or ammonium salts may also be used. The weight average molecular weight of the polymers is from 4000 to 12,000. Preferred polymers include polyacrylic acid, the partial sodium salts of polyacrylic acid or sodium polyacrylate having an average molecular weight within the range of 4000 to 8000.

Preferred builders for use with the methods of the present invention are water soluble. Water soluble inorganic alkaline builder salts which may be used alone or in admixture with other builders include, but are not limited to, alkali metal or ammonia or substituted ammonium salts of carbonates, silicates, phosphates and polyphosphates, and borates. Water soluble organic alkaline builders which are useful in the present invention include alkanolamines and cyclic amines.

Particularly preferred builders include PAA (polyacrylic acid) and its salts, phosphonobutane carboxylic acid, HEDP (1-Hydroxyethylidene-1,1-Diphosphonic Acid), EDTA and sodium gluconate.

In some embodiments, the builder may be a polyacrylic acid, phosphonobutane carboxylic acid, 1-hydroxyethylidene-1,1-diphosphonic acid, ethylenedinitrilotetraacetic acid, gluconic acid and/or salts thereof and preferably 1-hydroxyethylidene-1,1-diphosphonic acid.

In some embodiments, the amount of builder present in the concentrated compositions for use with the methods of the present invention is 0.001 wt% to 5 wt%. In some embodiments, 0.005 wt.-% to 0.1 wt.-% of builder is present. Acceptable levels of builder include 0.05 wt.-% to 2.5 wt.-%.

### Surfactants

In some embodiments of the composition of the invention a surfactant or mixture of surfactants may be used. The surfactant chosen may be compatible with the surface to be cleaned. A variety of surfactants may be used, including anionic, nonionic, cationic, and zwitterionic surfactants, which are commercially available from a number of sources. Suitable surfactants include nonionic surfactants, for example, low foaming non-ionic surfactants. For a discussion of surfactants, see Kirk-Othmer, Encyclopedia of Chemical Technology, Third Edition, volume 8, pages 900-912.

In some embodiments it may be preferred that the composition comprises at least one surfactant selected from the group comprising of a anionic surfactant and/or a non-ionic surfactant, preferably the surfactant can be selected from the group comprising of linear alkyl benzene sulfonates, alcohol sulfonates, amine oxides, alcohol ethoxylates, alkyl phenol ethoxylates, polyethylene glycol esters, EO/PO block copolymers, aminoxides, alkylbenzensulfonates, sodiumlaurylethersulfates and mixtures thereof; and most preferred the surfactant can be selected from the group comprising of aminoxides, alkylbenzensulfonates, sodiumlaurylethersulfates and mixtures thereof.

According to an embodiment the surfactant may be preferably selected from the group comprising anionic surfactant and/or non-ionic surfactant. It can be preferred that the surfactant is selected from the group comprising of linear alkyl benzene sulfonates, alcohol sulfonates, amine oxides, alcohol ethoxylates, alkyl phenol ethoxylates, polyethylene glycol esters, EO/PO block copolymers, and mixtures thereof.

In addition, the level and degree of foaming under the conditions of use and in subsequent recovery of the composition may be a factor for selecting particular surfactants and mixtures of surfactants. For example, in certain applications it may be desirable to minimize foaming and a surfactant or mixture of surfactants that provides reduced foaming may be used. In addition, it may be desirable to select a surfactant or a mixture of surfactants that exhibits a foam that breaks down relatively quickly so that the composition may be recovered and reused with an acceptable amount of down time. In addition, the surfactant or mixture of surfactants may be selected depending upon the particular soil that is to be removed.

The surfactants described herein may be used singly or in combination in the methods of the present invention. In particular, the nonionics and anionics may be used in combination. The semi-polar nonionic, cationic, amphoteric and zwitterionic surfactants may be employed in combination with nonionics or anionics. The above examples are merely specific illustrations of the numerous surfactants which may find application within the scope of this invention. It should be understood that the selection of particular surfactants or combinations of surfactants may be based on a number of factors including compatibility with the surface to be cleaned at the intended use concentration and the intended environmental conditions including temperature and pH.

In some embodiments, the amount of total surfactant in the compositions is ≥ 0.01 wt.- % to ≤ 10 wt.-%. Acceptable levels of surfactant include ≥ 0.04 wt.-% to ≤ 8 wt.-%, or ≥ 0.1 wt.-% to ≤ 4 wt.-%.

### Nonionic Surfactants

Nonionic surfactants suitable for use in the composition of the present invention include, but are not limited to, those having a polyalkylene oxide polymer as a portion of the surfactant molecule. Exemplary nonionic surfactants include, but are not limited to, chlorine-, benzyl-, methyl-, ethyl-, propyl-, butyl- and other like alkyl-capped polyethylene and/or polypropylene glycol ethers of fatty alcohols; polyalkylene oxide free nonionics such as alkyl polyglycosides; sorbitan and sucrose esters and their ethoxylates; alkoxylated ethylene diamine; carboxylic acid esters such as glycerol esters, polyoxyethylene esters, ethoxylated and glycol esters of fatty acids; carboxylic amides such as diethanolamine condensates, monoalkanolamine condensates, polyoxyethylene fatty acid amides; and ethoxylated amines and ether amines commercially available from Tomah Corporation and other like nonionic compounds. Silicone surfactants such as the ABIL B8852 (Goldschmidt) may also be used.

Additional exemplary nonionic surfactants suitable for use in the methods of the present invention, include, but are not limited to, those having a polyalkylene oxide polymer portion include nonionic surfactants of C6-C24 alcohol ethoxylates, preferably C6-C14 alcohol ethoxylates having 1 to 20 ethylene oxide groups, preferably 9 to 20 ethylene oxide groups; C6-C24 alkylphenol ethoxylates, preferably C8-C10 alkylphenol ethoxylates) having 1 to 100 ethylene oxide groups, preferably 12 to 20 ethylene oxide groups; C6-C24 alkylpolyglycosides, preferably C6-C20 alkylpolyglycosides, having 1 to 20 glycoside groups, preferably 9 to 20 glycoside groups; C6-C24 fatty acid ester ethoxylates, propoxylates or glycerides; and C4-C24 mono or dialkanolamides.

Exemplary alcohol alkoxylates include, but are not limited to, alcohol ethoxylate propoxylates, alcohol propoxylates, alcohol propoxylate ethoxylate propoxylates, alcohol ethoxylate butoxylates; nonylphenol ethoxylate, polyoxyethylene glycol ethers; and polyalkylene oxide block copolymers including an ethylene oxide/propylene oxide block copolymer such as those commercially available under the trademark PLURONIC (BASF-Wyandotte).

Examples of suitable low foaming nonionic surfactants also include, but are not limited to, secondary ethoxylates, such as those sold under the trade name TERGITOL^{™}, such as TERGITOL^{™} 15-S-7 (Union Carbide), Tergitol 15-S-3, Tergitol 15-S-9. Other suitable classes of low foaming nonionic surfactants include alkyl or benzyl-capped polyoxyalkylene derivatives and polyoxyethylene/polyoxypropylene copolymers.

An additional useful nonionic surfactant is nonylphenol having an average of 12 moles of ethylene oxide condensed thereon, it being end capped with a hydrophobic portion including an average of 30 moles of propylene oxide. Silicon-containing defoamers are also well-known and may be employed in the methods of the present invention.

In some embodiments, the amount of nonionic surfactant in the compositions is ≥ 0.1 wt.-% to ≤ 10 wt.-%. Acceptable levels of surfactant include ≥ 2 wt.-% to ≤ 8 wt.-%, or ≥ 4 wt.-% to ≤ 6 wt.-%.

### Amphoteric Surfactants

Suitable amphoteric surfactants include, but are not limited to, amine oxide compounds having the formula: 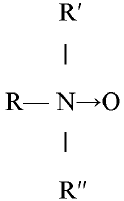 where R, R', R", and R'''are each a C₁-C₂₄ alkyl, aryl or arylalkyl group that may optionally contain one or more P, O, S or N heteroatoms.

Another class of suitable amphoteric surfactants includes betaine compounds having the formula: 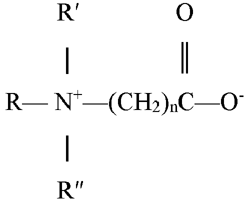 where R, R', R" and R''' are each a C₁-C₂₄ alkyl, aryl or aralkyl group that may optionally contain one or more P, O, S or N heteroatoms, and n is 1 to 10.

Suitable surfactants may also include food grade surfactants, linear alkylbenzene sulfonic acids and their salts, and ethylene oxide/propylene oxide derivatives sold under the Pluronic^{™} trade name. Suitable surfactants include those that are compatible as an indirect or direct food additive or substance.

In some embodiments, the amount of amphoteric surfactant in the compositions is ≥ 2 wt.-% to ≤ 10 wt.-%. Acceptable levels of surfactant include ≥ 4 wt.-% to ≤ 8 wt.-%, or ≥ 5 wt.-% to ≤ 6 wt.-%.

### Anionic surfactans

Anionic surfactants suitable for use with the disclosed methods may also include, for example, carboxylates such as alkylcarboxylates (carboxylic acid salts) and polyalkoxycarboxylates, alcohol ethoxylate carboxylates, nonylphenol ethoxylate carboxylates; sulfonates such as alkylsulfonates, alkylbenzenesulfonates, alkylarylsulfonates, sulfonated fatty acid esters; sulfates such as sulfated alcohols, sulfated alcohol ethoxylates, sulfated alkylphenols, alkylsulfates, sulfosuccinates, alkylether sulfates; and phosphate esters such as alkylphosphate esters. Exemplary anionics include, but are not limited to, sodium alkylarylsulfonate, alpha-olefin sulfonate, and fatty alcohol sulfates. Examples of suitable anionic surfactants include sodium dodecylbenzene sulfonic acid, potassium laureth-7 sulfate, and sodium tetradecenyl sulfonate.

In some embodiments, the surfactant includes linear alkyl benzene sulfonates, alcohol sulfonates, amine oxides, linear and branched alcohol ethoxylates, alkyl polyglucosides, alkyl phenol ethoxylates, polyethylene glycol esters, EO/PO block copolymers and combinations thereof.

In some embodiments, the amount of anionic surfactant in the compositions is ≥ 0.01 wt.-% to ≤ 10 wt.-%. Acceptable levels of surfactant include ≥ 0.02 wt.-% to ≤ 5 wt.-%, or ≥ 0.1 wt.-% to ≤ 2 wt.-%.

### Additional Components

Exemplary additional components that may be provided within the compositions used in the methods of the present invention may include builders, water conditioning agents, nonaqueous components, adjuvants, carriers, processing aids, enzymes, penetrants, antimicrobial agents, buffers, and pH adjusting agents.

### Penetrants

In some aspects, a penetrant may be used with the methods of the present invention. The penetrant may be combined with an alkaline source in the cleaning composition, or, the penetrant may be used without an alkaline source. In some embodiments, the penetrant is water miscible.

Examples of suitable penetrants include, but are not limited to, alcohols, short chain ethoxylated alcohols and phenol (having 1-6 ethoxylate groups). Organic solvents are also suitable penetrants. Examples of suitable organic solvents, for use as a penetrant, include esters, ethers, ketones, amines, and nitrated and chlorinated hydrocarbons.

Ethoxylated alcohols are also suitable for use with the methods of the present invention. Examples of ethoxylated alcohols include, but are not limited to, alky, aryl, and alkylaryl alkloxylates. These alkloxylates may be further modified by capping with chlorine-, bromine-, benzyl-, methyl-, ethyl-, propyl-, butyl- and alkyl-groups. Ethoxylated alcohols may be present in the cleaning composition from 0.1 wt% to 20 wt%.

Fatty acids are also suitable for use as penetrants in the methods of the present invention. Some non-limiting examples of fatty acids are C₆ to C₁₂ straight or branched fatty acids. In some embodiments, fatty acids used in the methods of the present invention are liquid at room temperature.

In some embodiments, a penetrant for use in the methods of the present invention includes water soluble glycol ethers. Examples of glycol ethers include dipropylene glycol methyl ether (available under the trade designation DOWANOL DPM from Dow Chemical Co.), diethylene glycol methyl ether (available under the trade designation DOWANOL DM from Dow Chemical Co.), propylene glycol methyl ether (available under the trade designation DOWANOL PM from Dow Chemical Co.), and ethylene glycol monobutyl ether (available under the trade designation DOWANOL EB from Dow Chemical Co.).

### Storage stable concentrated composition

The composition of the invention can be provided in the form of a storage stable concentrated composition.

In some embodiments storage stable concentrated compositions may be obtained by mixing:
- ≥ 0. 5 wt.-% to ≤ 20 wt.-%, preferably ≥ 1 wt.-% to ≤ 15 wt.-%, and more preferred ≥ 5 wt.-% to ≤ 10 wt.-%, of at least one sulfocarboxylic acid, preferably sulphated oleic acid;
- ≥ 1 wt.-% to ≤ 15 wt.-%, preferably ≥ 3 wt.-% to ≤ 10 wt.-%, and more preferred ≥ 5 wt.-% to ≤ 8 wt.-%, of a C₁ to C₄ carboxylic acid, preferably acetic acid;
- ≥ 0.1 wt.-% to ≤ 10 wt.-%, preferably ≥ 0.5 wt.-% to ≤ 5 wt.-%, and more preferred ≥ 1 wt.-% to ≤ 2 wt.-%, of at least one C₅ to C₁₀ carboxylic acid, preferably octanoic acid;
- ≥ 1 wt.-% to ≤ 30 wt.-%, preferably ≥ 5 wt.-% to ≤ 15 wt.-%, and more preferred ≥ 10 wt.-% to ≤ 12 wt.-%, of at least one peroxide agent, preferably hydrogen peroxide;
- ≥ 1 wt.-% to ≤ 20 wt.-%, preferably ≥ 5 wt.-% to ≤ 15 wt.-%, and more preferred ≥ 10 wt.-% to ≤ 12 wt.-%, of at least one hydrotrope, preferably cumene sulfonate;
- ≥ 1 wt.-% to ≤ 20 wt.-%, preferably ≥ 5 wt.-% to ≤ 15 wt.-%, and more preferred ≥ 11 wt.-% to ≤ 12 wt.-%, of at least one acidulant, preferably sulfuric acid;
- ≥ 0 wt.-% to ≤ 10 wt.-%, preferably ≥ 0.5 wt.-% to ≤ 5 wt.-%, and more preferred ≥ 1 wt.-% to ≤ 1.5 wt.-%, of at least one builder, preferably 1-hydroxyethylidene-1,1-diphosphonic acid;
- ≥ 0 wt.-% to ≤ 20 wt.-%, preferably ≥ 5 wt.-% to ≤ 15 wt.-%, and more preferred ≥ 10 wt.-% to ≤ 12 wt.-%, of at least one tenside, preferably amine oxide; and
- a solvent, preferably water, wherein the components are selected such that the total weight amount of all components of the composition is 100 wt.-%.

The storage stable concentrated composition can be further diluted in order to obtain a diluted composition that can be directly used in a clean in place (CIP) and/or clean out of place (CIP) process. According to some embodiments the diluted composition can be used for cleaning, bleaching and/or disinfecting of tanks, lines, pumps and other process equipment used for processing typically liquid product streams of beverages, in particular for cleaning milking machines.

### Diluted compositions

In some embodiments a diluted composition of a storage stable concentrated compositions may be obtained by diluting a storage stable concentrated composition with a solvent, preferably water, in a ratio of concentrated composition to solvent of 1 : 5000 to 1 : 10, preferably of 1 : 1000 to 1 : 50, in particular of 1 : 500 to 1 : 100, and more preferred of 1 : 100 to 1 : 250.

In some embodiments a diluted concentrated compositions may be obtained by mixing:
- ≥ 0.0025 wt.-% to ≤ 1 wt.-%, preferably ≥ 0.001 wt.-% to ≤ 0. 5 wt.-%, and more preferred ≥ 0.025 wt.-% to ≤ 0.25 wt.-%, of at least one sulfocarboxylic acid, preferably sulphated oleic acid;
- ≥ 0.0005 wt.-% to ≤ 0.75 wt.-%, preferably ≥ 0.001 wt.-% to ≤ 0.5 wt.-%, and more preferred ≥ 0.005 wt.-% to ≤ 0. 25 wt.-%, of a C₁ to C₄ carboxylic acid, preferably acetic acid;
- ≥ 0.0005 wt.-% to ≤ 0.5 wt.-%, preferably ≥ 0.005 wt.-% to ≤ 0.25 wt.-%, and more preferred ≥ 0.05 wt.-% to ≤ 0.1 wt.-%, of at least one C₅ to C₁₀ carboxylic acid, preferably octanoic acid;
- ≥ 0.005 wt.-% to ≤ 1.5 wt.-%, preferably ≥ 0.01 wt.-% to ≤ 1 wt.-%, and more preferred ≥ 0.05 wt.-% to ≤ 0.5 wt.-%, of at least one peroxide agent, preferably hydrogen peroxide;
- ≥ 0.0005 wt.-% to ≤ 1 wt.-%, preferably ≥ 0.001 wt.-% to ≤ 0.5 wt.-%, and more preferred ≥ 0.01 wt.-% to ≤ 0.1 wt.-%, of at least one hydrotrope, preferably cumene sulfonate;
- ≥ 0.0005 wt.-% to ≤ 1 wt.-%, preferably ≥ 0.001 wt.-% to ≤ 0.5 wt.-%, and more preferred ≥ 0.01 wt.-% to ≤ 0.1 wt.-%, of at least one acidulant, preferably sulfuric acid;
- ≥ 0 wt.-% to ≤ 0.5 wt.-%, preferably ≥ 0.0005 wt.-% to ≤ 0.1 wt.-%, and more preferred ≥ 0.005 wt.-% to ≤ 0.05 wt.-%, of at least one builder, preferably 1-hydroxyethylidene-1,1-diphosphonic acid;
- ≥ 0 wt.-% to ≤ 1 wt.-%, preferably ≥ 0.001 wt.-% to ≤ 0.5 wt.-%, and more preferred ≥ 0.01 wt.-% to ≤ 0.1 wt.-%, of at least one tenside, preferably aminoxides, alkylbenzensulfonates, and/or sodiumlaurylethersulfates; and
- a solvent, preferably water, wherein the components are selected such that the total weight amount of all components of the composition is 100 wt.-%.

### Methods of Cleaning

In some aspects, the present invention provides methods for removing soil from a surface. In some embodiments, the methods for removing soil from a surface include using a clean out of place (COP) or clean in place (CIP) cleaning process. In some embodiments, the present invention provides methods for disinfection. In some preferred embodiments, the present invention provides methods for removing soil from a surface and disinfection. In some further embodiments, the methods for removing soil from a surface include using a clean out of place (COP) in combination with disinfection or clean in place (CIP) cleaning process in combination with disinfection.

The methods include applying to the surface a composition of the invention, preferably in form of ready-to-use solution. A ready-to-use solution means a composition that can be applied in the process without further diluting. However, in some embodiments a storage stable concentrated compositions is used that can be further diluted, for example at the place that has to be cleaned, bleached and/or disinfected.

### Surfaces

In some embodiments, the methods and compositions of the present invention are applied to surfaces, which are normally cleaned using a clean out of place or in place cleaning technique. Examples of such surfaces include hard and soft surface, for example of upper outer and/or inner outer surfaces of materials such as ceramic, metal, plastic and/or glas, surface that came into contact with beverages and/or food, beverages such alcoholic or non-alcoholic beverages such as beer or milk, food such as meat, vegetables and/or grain-products. Other surfaces that can be cleaned are instruments and apparatus, for example used in sanitary or medical services, evaporators, heat exchangers, including tube-in-tube exchangers, direct steam injection, and plate-in-frame exchangers, heating coils including steam, flame or heat transfer fluid heated re-crystallizers, pan crystallizers, spray dryers, drum dryers, and tanks.

Additional surfaces capable of being cleaned using the methods and compositions of the present invention include, but are not limited to membranes, medical devices, laundry and/or textiles, and hard surfaces, e.g., walls, floors, dishes, flatware, pots and pans, heat exchange coils, ovens, fryers, smoke houses, sewer drain lines, and vehicles. In some embodiments, the surfaces may be cleaned using a clean in place method. The methods of the present invention may also be used to remove dust from air handling equipment, for example, from air conditioners and refrigeration heat exchangers. In other embodiments, the methods of the present invention may be used for drain line microbial control, e.g., to reduce or remove biofilm formation.

Exemplary industries in which the methods and compositions of the present invention may be used include, but are not limited to: the food and beverage industry, e.g., the milk, dairy, cheese, sugar, and brewery industries; oil processing industry; industrial agriculture and ethanol processing; and the pharmaceutical manufacturing industry.

### Temperature

The methods and compositions of the present invention for cleaning, bleaching and/or disinfecting from surfaces can be used at reduced temperatures, e.g., from ≥ 0° C to ≤ 30° C, preferably at ≥ 2° C to ≤ 25° C, preferably ≥ 4° C to ≤ 20° C and more preferred ≥ 5° C to ≤ 15° C.. The composition of the invention has an increased cleaning, bleaching and in particular disinfecting activity compared to conventional compositions, e.g. used for clean out of place and/or clean in place techniques.

The ability to use the composition according to the invention at reduced temperatures, preferably at ≤ 20° C results in energy and cost savings compared to traditional cleaning techniques that require increased temperatures..

It has also been found that the composition of the present invention provide for cleaning, bleaching and/or disinfecting need reduced amounts of chemistry, compared to conventional cleaning compositions. In some embodiments, the methods of the present invention use 20% to 70% less active components, than standard peracid compositions used in conventional cleaning methods. Thus, the methods of the present invention may effectively remove soil, bleach and/or disinfect surfaces at reduced temperatures, and using a low concentration of chemicals, providing both an energy savings and a reduction in the amount of chemistry consumed per cleaning.

### Time

In some aspects of the invention, the compositions for use with the methods of the present invention are applied as concentrated composition or in the form of a ready-to-use solution, i.e. the concentrated solution is diluted further to a composition that can be direct used.

In some embodiments, the composition, preferably the diluted composition, in particular for CIP applications, is applied to the surface to be treated for 1 minutes to 60 minutes, preferably 3 minutes to 30 minutes, further preferred 5 minutes to 10 minutes.

In other embodiments, the composition, preferably the diluted composition, in particular for COP applications, is applied to the surface for 10 minutes to 30 minutes. It is to be understood that all values and ranges between these values and ranges are encompassed by the methods of the present invention.

### EXAMPLES

The present invention is more particularly described in the following examples that are intended as illustrations only. Unless otherwise noted, all parts, percentages, and ratios reported in the following examples are on a weight basis, and all reagents used in the examples were obtained, or are available, from the chemical suppliers described below, or may be synthesized by conventional techniques.

**Table 1**

| Components | E1 wt.-% | E2 wt.-% | E3 wt.-% | E4 wt.-% | E5 wt.-% | E6 wt.-% |
|---|---|---|---|---|---|---|
| H₂O | 51.01 | 40.32 | 29.38 | 18.23 | 41.98 | 36.98 |
| Acetic Acid 80% | 10.10 | 10.20 | 10.31 | 10.42 | 10.00 | 10.00 |
| Octanoic Acid | 0.51 | 0.51 | 0.52 | 0.52 | 0.50 | 0.50 |
| H₂SO₄ 50% | 12.12 | 12.24 | 12.37 | 12.50 | 23.52 | 23.52 |
| H₂O₂ 50% | 10.10 | 20.41 | 30.93 | 41.67 | 10.00 | 15.00 |
| HEDP^{∗1} | 1.01 | 1.02 | 1.03 | 1.04 | 1.00 | 1.00 |
| Sulfocarboxylic acid^{∗2} | 5.05 | 5.10 | 5.15 | 5.21 | 3.00 | 3.00 |
| Cumolsulfat | 10.10 | 10.20 | 10.31 | 10.41 | 10.00 | 10.00 |
| Total | 100 wt.-% | 100 wt.-% | 100 wt.-% | 100 wt.-% | 100 wt.-% | 100 wt.-% |

| | | | | | | |
|---|---|---|---|---|---|---|
| ^{∗1} = 1-Hydroxyethane-(1,1-diphosphonic acid) ^{∗2} = sulphated oleic acid, preferably Lankropol OPA available from AkzoNobel | | | | | | |

Table 1 shows examples E1 to E6 of the invention that shows no phase separation at 40° C at a storage period of at least 7 days.

**Table 2**

| Components | E7 wt.-% | E8 wt.-% | E9 wt.-% | E10 wt.-% | E11 wt.-% | E12 wt.-% |
|---|---|---|---|---|---|---|
| H₂O | 31.98 | 40.98 | 35.98 | 30.98 | 39.98 | 34.98 |
| Acetic Acid 80% | 10.00 | 10.00 | 10.00 | 10.00 | 10.00 | 10.00 |
| Octanoic Acid | 0.50 | 0.50 | 0.50 | 0.50 | 0.50 | 0.50 |
| H₂SO₄ 50% | 23.52 | 23.52 | 23.52 | 23.52 | 23.52 | 23.52 |
| H₂O₂ 50% | 20.00 | 10.00 | 15.00 | 20.00 | 10.00 | 15.00 |
| HEDP^{∗1} | 1.00 | 1.00 | 1.00 | 1.00 | 1.00 | 1.00 |
| Sulfocarboxylic acid^{∗2} | 3.00 | 4.00 | 4.00 | 4.00 | 5.00 | 5.00 |
| Cumolsulfat | 10.00 | 10.00 | 10.00 | 10.00 | 10.00 | 10.00 |
| Total | 100 wt.-% | 100 wt.-% | 100 wt.-% | 100 wt.-% | 100 wt.-% | 100 wt.-% |

| | | | | | | |
|---|---|---|---|---|---|---|
| ^{∗1} = 1-Hydroxyethane-(1,1-diphosphonic acid) ^{∗2} = sulphated oleic acid, preferably Lankropol OPA available from AkzoNobel | | | | | | |

Table 2 shows examples E7 to E12 of the invention that shows no phase separation at 40° C at a storage period of at least 7 days.

**Table 3**

| Components | E13 wt.-% | E14 wt.-% | E15 wt.-% | E16 wt.-% | E17 wt.-% |
|---|---|---|---|---|---|
| H₂O | 29.99 | 33.71 | 30.89 | 39.71 | 37.79 |
| Acetic Acid 80% | 10.00 | 15.94 | 8.12 | 15.94 | 8.12 |
| Octanoic Acid | 0.50 | 1.02 | 2.00 | 1.02 | 2.0 |
| H₂SO₄ 50% | 23.51 | 20.47 | 20.45 | 20.47 | 20.45 |
| H₂O₂ 50% | 20.00 | 15.30 | 24.49 | 15.30 | 24.49 |
| HEDP^{∗1} | 1.00 | 1.00 | 1.00 | 1.00 | 1.00 |
| Sulfocarboxylic acid^{∗2} | 5.00 | 2.56 | 1.65 | 2.56 | 1.65 |
| Cumolsulfat | 10.00 | 10.00 | 11.40 | 4.00 | 4.50 |
| Total | | 100 wt.-% | 100 wt.-% | 100 wt.-% | 100 wt.-% |

| | | | | | |
|---|---|---|---|---|---|
| ^{∗1} = 1-Hydroxyethane-(1,1-diphosphonic acid) ^{∗2} = sulphated oleic acid, preferably Lankropol OPA available from AkzoNobel | | | | | |

Table 3 shows examples E13 to E17 of the invention that shows no phase separation at 40° C at a storage period of at least 7 days.

**Table 4**

| Components | C1 wt.-% | C2 wt.-% | C3 wt.-% | C4 wt.-% | C5 wt.-% | C6 wt.-% |
|---|---|---|---|---|---|---|
| H₂O | 53.54 | 47.96 | 42.27 | 51.03 | 45.26 | 39.36 |
| Acetic Acid 80% | 10.10 | 10.20 | 10.31 | 10.42 | 10.53 | 10.64 |
| Octanoic Acid | - | - | - | - | - | - |
| H₂SO₄ 50% | 12.12 | 12.25 | 12.37 | 12.50 | 12.63 | 12.77 |
| H₂O₂ 50% | 10.10 | 15.31 | 20.62 | 10.42 | 15.79 | 21.28 |
| HEDP^{∗1} | 1.01 | 1.02 | 1.03 | 1.04 | 1.05 | 1.06 |
| Sulfocarboxylic acid^{∗2} | 3.03 | 3.06 | 3.09 | 4.17 | 4.21 | 4.25 |
| Cumolsulfat | 10.10 | 10.20 | 10.31 | 10.42 | 10,53 | 10.64 |
| Total | 100 wt.-% | 100 wt.-% | 100 wt.-% | 100 wt.-% | 100 wt.-% | 100 wt.-% |

| | | | | | | |
|---|---|---|---|---|---|---|
| ^{∗1} = 1-Hydroxyethane-(1,1-diphosphonic acid) ^{∗2} = sulphated oleic acid, preferably Lankropol OPA available from AkzoNobel | | | | | | |

Table 4 shows comparative examples C1 to C6 of the invention. The comparative compositions of C1 to C6 show phase separation at 40°C at a storage period of ≤ 7 days.

**Table 5**

| Components | C7 wt.-% | C8 wt.-% | C9 wt.-% |
|---|---|---|---|
| H₂O | 48.39 | 42.39 | 36.26 |
| Acetic Acid 80% | 10.75 | 10.87 | 10.99 |
| Octanoic Acid | - | - | - |
| H₂SO₄ 50% | 12.90 | 13.04 | 13.19 |
| H₂O₂ 50% | 10.75 | 16.30 | 21.98 |
| HEDP^{∗1} | 1.08 | 1.09 | 1.10 |
| Sulfocarboxylic acid^{∗2} | 5.38 | 5.44 | 5.49 |
| Cumolsulfat | 10.75 | 10.87 | 10.99 |
| Total | 100 wt.-% | 100 wt.-% | 100 wt.-% |

| | | | |
|---|---|---|---|
| ^{∗1} = 1-Hydroxyethane-(1,1-diphosphonic acid) ^{∗2} = sulphated oleic acid, preferably Lankropol OPA available from AkzoNobel | | | |

Table 5 shows comparative examples C7 to C9 of the invention that shows phase separation at 40°C at a storage period of ≤ 7 days.

**Table 6**

| CFU (colony forming unit) of the initial state of germs in log/ml | | |
|---|---|---|
| germs | strain | CFU |
| Staphylococcus aureus | DSM 799 | 1.96 × 10⁸ |
| Enterococcus hirae | DSM 3320 | 2.13 × 10⁸ |
| Escherichia coli K12 | DSM 682 | 2.44 × 10⁸ |
| Pseudomonas aeruginosa | DSM 939 | 3.45 × 10⁸ |

The bactericidal and fungicidal activity of compositions according to invention was tested under simulated high soiling conditions with 3 g/l bovine albumin solution and incubation time of 37°C. The compositions of E1 to E17 were dilution in deionized water to a 0. 25 wt.-%, 0.5 wt.-% and 1.0 wt.-% ready-to-use composition according to standards EN 1276:2009. The suspension experiments were performed according to standard procedures for the following germs: Escherichia coli, DSM 682; Pseudomonas aeruginosa, DSM 939; Staphylococcus aureus, DSM 799; and Enterococcus hirae, DSM 3320. The disinfectant exhibited a complete elimination of all tested germs by a factor of at least 10⁵ at testing time of 5 minutes at a test temperature of 20° C.

**Table 7**

| CFU average reduction factors of germs for a 0.5% liquid composition | | | | |
|---|---|---|---|---|
| 23° C | Staphylococcus | Enterococcus | Escherichia coli | Pseudomonas |

| | aureus | hirae | | aeruginosa |
|---|---|---|---|---|
| E1 to E17 0.25 wt.-% | > 2 × 10⁵ | > 1.96 × 10⁵ | > 3.04 × 10⁵ | > 3.14 × 10⁵ |
| E1 to E17 0.5 wt.-% | > 1.4 × 10⁵ | > 1.52 × 10⁵ | > 1.74 × 10⁵ | > 2.46 × 10⁵ |
| E1 to E17 1.0 wt.-% | > 1.4 × 10⁵ | > 1.52 × 10⁵ | > 1.74 × 10⁵ | > 2.46 × 10⁵ |
| C1-C6 1.0 wt.-% | - | - | - | - |

Table 7 shows that an aqueous 0.25 wt.-%, 0.5 wt.-% and 1 wt.-% liquid composition (ready-to-use composition) of E1 to E17 at 20° C test temperature were capable to reduce the viable counts of the bacterial test strains Staphylococcus aureus, Enterococcus hirae, Escherichia coli and Pseudomonas aeruginosa by a factor of at least 10⁵ within 5 minutes under the influence of interfering substance simulating high soiling conditions.

Phase separation of the comparative composition of C1 to C6 has the drawback that the bactericidal and fungicidal activity becomes dramatically worse, so that the CFU average reduction factors cannot be suitable determined. Moreover, due to the phase separation of said compositions C1 to C6 the contained sulfocarboxylic acid and other components thereof precipitate on the surfaces that were exposed to said compositions. Thus, compositions of C1 to C6 cannot be used in CIP and COP processes.

## Claims

1. A liquid, storage stable composition comprising a mixture of:
a) a sulfoperoxycarboxylic acid,
b) a C₁ to C₄ percarboxylic acid,
c) a C₅ to C₁₀ percarboxylic acid,
d) a peroxide agent,
e) a hydrotrope,
f) an acidulant in an amount of > 0 wt.% to ≤ 20 wt.% based on the total weight of the composition,
g) a liquid; wherein the composition comprises free sulfocarboxylic acid, free C₁ to C₄ carboxylic acid and free C₅ to C₁₀ carboxylic acid and is obtainable by mixing
i) the peroxide agent, and ii) carboxylic acids of at least one sulfocarboxylic acid, at least one C₁ to C₄ carboxylic acid in an amount of > 5 wt.% to ≤ 50 wt.% based on the total weight of the composition and at least one C₅ to C₁₀ carboxylic acid in an amount of > 0 wt.% to ≤ 2 wt.% based on the total weight of the composition.

2. The composition of claim 1, wherein the composition comprises the C₅ to C₁₀ percarboxylic acid, preferably peroctanoic acid, in an amount of about > 0 wt.-% to about ≤ 2 wt.-%, preferably ≥ 0.0001 wt.-% to about ≤ 1.2 wt.-%, or ≥ 0.001 wt.-% to about ≤ 0.8 wt.-%, based on the total weight of the composition; and/or C₅ to C₁₀ carboxylic acid, preferably octanoic acid, in an amount of about > 0 wt.-% to about ≤ 2 wt.-%, preferably ≥ 0.0001 wt.-% to about ≤ 1.2 wt.-%, or ≥ 0.001 wt.-% to about ≤ 0.8 wt.-%, based on the total weight of the composition; and preferably a mixture of a C₅ to C₁₀ percarboxylic acid and C₅ to C₁₀ carboxylic acid, preferably a mixture of peroctanoic acid and octanoic acid, in an amount of about > 0 wt.-% to about ≤ 2 wt.-%, preferably ≥ 0.0001 wt.-% to about ≤ 1.2 wt.-%, or > 0.001 wt.-% to about ≤ 0.8 wt.-%, based on the total weight of the composition, and/or wherein the composition comprises the C₁ to C₄ percarboxylic acid, preferably peracetic acid, in an amount of about > 2.5 wt.-% to about ≤ 16.5 wt.-%, preferably ≥ 5 wt.-% to about ≤ 15 wt.-%, or ≥ 7.5 wt.-% to about ≤ 10 wt.-%, based on the total weight of the composition; and/or C₁ to C₄ carboxylic acid, preferably acetic acid, in an amount of about > 5 wt.-% to about ≤ 50 wt.-%, preferably ≥ 6 wt.-% to about ≤ 20 wt.-%, or ≥ 7 wt.-% to about ≤ 15 wt.-%, based on the total weight of the composition; and preferably a mixture of a C₁ to C₄ peracetic acid and C₁ to C₄ carboxylic acid, preferably a mixture of peracetic acid and acetic acid, in an amount of about > 7.5 wt.-% to about ≤ 66.5 wt.-%, preferably ≥ 11 wt.-% to about ≤ 35 wt.-%, or ≥ 14.5 wt.-% to about ≤ 25 wt.-%, based on the total weight of the composition.

3. The composition of claim 1 or 2, wherein the composition comprises the acidulant, preferably sulfuric acid, in an amount of about > 0 wt.-% to about ≤ 20 wt.-%, preferably ≥ 0.002 wt.-% to about ≤ 15 wt.-%, or ≥ 0.02 wt.-% to about ≤ 12 wt.-%, based on the total weight of the composition.

4. The composition of claims 1 to 3, wherein the composition is obtained by mixing:
i) peroxide agent; and
ii) carboxylic acids of
- at least one sulfocarboxylic acid,
- at least one C₁ to C₄ carboxylic acid,
- at least one C₅ to C₁₀ carboxylic acid;
at a weight.-% ratio of i) peroxide agent to ii) carboxylic acids of about 1.0 : 0.15 to 1.0 : 1.2.

5. The composition of claims 1 to 4, wherein the sulfoperoxycarboxylic acid is a compound according to Formula I and the sulfocarboxylic acid is a compound according to Formula II:
R₁-CH(SO₃⁻X⁺)R₂-COOOH (Formula I)
R₁-CH(SO₃⁻X⁺)R₂-COOH (Formula II)
wherein:
R₁ is hydrogen, or a substituted or unsubstituted Cₘ alkyl group, for example CH₃-(CH)₇- C=C-, preferably hydrogen;
R₂ is hydrogen, or a substituted or unsubstituted Cₙ alkyl group, for example -(CH₂)₆-, preferably hydrogen;
X is hydrogen, a cationic group, or an ester-forming moiety, preferably hydrogen; m is 1 to 10, preferably 8 to 10;
n is 1 to 10; preferably 6 to 8; and
m+n is less than or equal to 18, or salts or esters thereof;
preferably the sulfoperoxycarboxylic acid is
CH₃-(CH)₇-C=C-CH(SO₃⁻X⁺)-(CH₂)₆-COOOH,
and the sulfocarboxylic acid is
CH₃-(CH)₇-C=C-CH(SO₃⁻X⁺)-(CH₂)₆-COOH.

6. The composition of claims 1 to 5, wherein the C₁ to C₄ percarboxylic acid comprises peroxyacetic acid, the C₅ to C₁₀ percarboxylic acid comprises peroxyoctanoic acid, the C₁ to C₄ carboxylic acid comprises acetic acid, and/or the C₅ to C₁₀ carboxylic acid comprises octanoic acid.

7. The composition of claims 1 to 6, wherein the peroxide agent comprises hydrogen peroxide, a perborate, a percarbonate and mixtures and derivatives thereof, and preferably hydrogen peroxide.

8. The composition of claims 1 to 7, wherein the acidulant is selected from the group consisting of sulfuric acid, caprylic acid, sodium bisulfate, nitric acid, hydrochloric acid, methane sulfonic acid, ethane sulfonic acid, propane sulfonic acid, butane sulfonic acid, formic acid, acetic acid, halocarboxylic acids, picolinic acid, dipicolinic acid, and mixtures thereof, and preferably sulfuric acid.

9. The composition of claims 1 to 8, wherein the composition comprises at least one hydrotrope selected from the group comprising of a aromatic hydrocarbon sulfonate or aromatic hydrocarbon sulfonic acid, preferably xylene-, toluene-, or cumene sulfonate, n-octane sulfonate, and/or acids thereof and preferably cumene sulfonate and/or cumene sulfonic acid.

10. The composition of claims 1 to 9, wherein the composition comprises at least one builder selected from the group comprising of a polyacrylic acid, phosphonobutane carboxylic acid, 1-hydroxyethylidene-1,1-diphosphonic acid, ethylenedinitrilotetraacetic acid, gluconic acid and/or salts thereof and preferably 1-hydroxyethylidene-1,1-diphosphonic acid.

11. The composition of claims 1 to 10, wherein the composition comprises at least one surfactant selected from the group comprising of a anionic surfactant and/or a non-ionic surfactant, preferably the surfactant is selected from the group comprising of linear alkyl benzene sulfonates, alcohol sulfonates, amine oxides, alcohol ethoxylates, alkyl phenol ethoxylates, polyethylene glycol esters, EO/PO block copolymers, aminoxides, alkylbenzensulfonates, sodiumlaurylethersulfates and mixtures thereof and most preferred the surfactant is selected from the group comprising of aminoxides,
alkylbenzensulfonates, sodiumlaurylethersulfates and mixtures thereof.

12. The composition of claims 1 to 11, wherein a storage stable concentrated composition is obtained by mixing:
- ≥ 0.5 wt.-% to about ≤ 20 wt.-%, preferably ≥ 1 wt.-% to about ≤ 15 wt.-%, and more preferred ≥ 5 wt.-% to about ≤ 10 wt.-%, of at least one sulfocarboxylic acid, preferably sulphated oleic acid, preferably sulphated oleic acid;
- ≥ 1 wt.-% to about ≤ 15 wt.-%, preferably ≥ 3 wt.-% to about ≤10 wt.-%, and more preferred ≥ 5 wt.-% to about ≤ 8 wt.-%, of a C₁ to C₄ carboxylic acid, preferably acetic acid;
- ≥ 0.1 wt.-% to about ≤ 10 wt.-%, preferably ≥ 0.5 wt.-% to about ≤ 5 wt.-%, and more preferred ≥ 1 wt.-% to about ≤ 2 wt.-%, of at least one C₅ to C₁₀ carboxylic acid, preferably octanoic acid;
- ≥ 1 wt.-% to about ≤ 30 wt.-%, preferably ≥ 5 wt.-% to about ≤ 15 wt.-%, and more preferred ≥ 10 wt.-% to about ≤ 12 wt.-%, of at least one peroxide agent, preferably hydrogen peroxide;
- ≥ 1 wt.-% to about ≤ 20 wt.-%, preferably ≥ 5 wt.-% to about ≤ 15 wt.-%, and more preferred ≥ 10 wt.-% to about ≤ 12 wt.-%, of at least one hydrotrope, preferably cumene sulfonate;
- ≥ 1 wt.-% to about ≤ 20 wt.-%, preferably ≥ 5 wt.-% to about ≤ 15 wt.-%, and more preferred ≥ 11 wt.-% to about ≤ 12 wt.-%, of at least one acidulant, preferably sulfuric acid;
- ≥ 0 wt.-% to about ≤ 10 wt.-%, preferably ≥ 0.5 wt.-% to about ≤ 5 wt.-%, and more preferred ≥ 1 wt.-% to about ≤ 1.5 wt.-%, of at least one builder, preferably 1-hydroxyethylidene-1,1-diphosphonic acid;
- ≥ 0 wt.-% to about ≤ 20 wt.-%, preferably ≥ 5 wt.-% to about ≤ 15 wt.-%, and more preferred ≥ 10 wt.-% to about ≤ 12 wt.-%, of at least one tenside, preferably amine oxide; and
- a solvent, preferably water, wherein the components are selected such that the total weight amount of all components of the composition is 100 wt.-%.

13. The composition of claims 1 to 12, wherein the concentrated composition is further diluted with a solvent, preferably with water, to a ready-to-use solution.

14. A method for removing soil, bleaching and/or reducing a population of organism on a surface comprising applying to the surface a composition of claims 1 to 13.

15. Use of the composition of claims 1 to 13 in a clean-in-place system (CIP) or in a clean-out-of-place systems (COP), preferably for cleaning and/or disinfecting of milking machines.

## Patentansprüche

1. Flüssige, lagerstabile Zusammensetzung, die eine Mischung aus Folgendem umfasst:
a) einer Sulfoperoxycarbonsäure,
b) einer C₁- bis C₄-Percarbonsäure,
c) einer C₅- bis C₁₀-Percarbonsäure,
d) einem Peroxidmittel,
e) einem Hydrotrop,
f) einem Säuerungsmittel in einer Menge von > 0 Gew.-% bis ≤ 20 Gew.-% basierend auf dem Gesamtgewicht der Zusammensetzung,
g) einer Flüssigkeit; wobei die Zusammensetzung freie Sulfocarbonsäure, freie C₁-bis C₄-Carbonsäure und freie C₅- bis C₁₀-Carbonsäure umfasst und durch ein Mischen von Folgendem erhältlich ist:
i) dem Peroxidmittel und ii) Carbonsäuren von wenigstens einer Sulfocarbonsäure, wenigstens einer C1- bis C4-Carbonsäure in einer Menge von > 5 Gew.-% bis ≤ 50 Gew.-% basierend auf dem Gesamtgewicht der Zusammensetzung und wenigstens einer C5- bis C10-Carbonsäure in einer Menge von > 0 Gew.-% bis ≤ 2 Gew.-% basierend auf dem Gesamtgewicht der Zusammensetzung.

2. Zusammensetzung nach Anspruch 1, wobei die Zusammensetzung Folgendes umfasst: die C₅- bis C₁₀-Percarbonsäure, bevorzugt Peroctansäure, in einer Menge von etwa > 0 Gew.-% bis etwa ≤ 2 Gew.-%, bevorzugt ≥ 0,0001 Gew.-% bis etwa ≤ 1,2 Gew.-% oder ≥ 0,001 Gew.-% bis etwa ≤ 0,8 Gew.-%, basierend auf dem Gesamtgewicht der Zusammensetzung; und/oder C₅- bis C₁₀-Carbonsäure, bevorzugt Octansäure, in einer Menge von etwa > 0 Gew.-% bis etwa ≤ 2 Gew.-%, bevorzugt ≥ 0,0001 Gew.-% bis etwa < 1,2 Gew.-% oder ≥ 0,001 Gew.-% bis etwa ≤ 0,8 Gew.-%, basierend auf dem Gesamtgewicht der Zusammensetzung; und bevorzugt eine Mischung aus einer C₅- bis C₁₀-Percarbonsäure und einer C₅- bis C₁₀-Carbonsäure, bevorzugt eine Mischung aus Peroctansäure und Octansäure, in einer Menge von etwa > 0 Gew.-% bis etwa ≤ 2 Gew.-%, bevorzugt ≥ 0,0001 Gew.-% bis etwa ≤ 1,2 Gew.-% oder > 0,001 Gew.-% bis etwa ≤ 0,8 Gew.-%, basierend auf dem Gesamtgewicht der Zusammensetzung, und/oder wobei die Zusammensetzung Folgendes umfasst: die C₁- bis C₄-Percarbonsäure, bevorzugt Peressigsäure, in einer Menge von etwa > 2,5 Gew.-% bis etwa ≤ 16,5 Gew.-%, bevorzugt ≥ 5 Gew.-% bis etwa ≤ 15 Gew.-% oder ≥ 7,5 Gew.-% bis etwa ≤ 10 Gew.-%, basierend auf dem Gesamtgewicht der Zusammensetzung; und/oder C₁- bis C₄-Carbonsäure, bevorzugt Essigsäure, in einer Menge von etwa > 5 Gew.-% bis etwa ≤ 50 Gew.-%, bevorzugt ≥ 6 Gew.-% bis etwa ≤ 20 Gew.-% oder ≥ 7 Gew.-% bis etwa ≤ 15 Gew.-%, basierend auf dem Gesamtgewicht der Zusammensetzung; und bevorzugt eine Mischung aus einer C₁- bis C₄-Peressigsäure und C₁- bis C₄-Carbonsäure, bevorzugt eine Mischung aus Peressigsäure und Essigsäure, in einer Menge von etwa > 7,5 Gew.-% bis etwa ≤ 66,5 Gew.- %, bevorzugt ≥ 11 Gew.-% bis etwa ≤ 35 Gew.-% oder ≥ 14,5 Gew.-% bis etwa ≤ 25 Gew.-%, basierend auf dem Gesamtgewicht der Zusammensetzung.

3. Zusammensetzung nach Anspruch 1 oder 2, wobei die Zusammensetzung das Säuerungsmittel, bevorzugt Schwefelsäure, in einer Menge von etwa > 0 Gew.-% bis etwa ≤ 20 Gew.-%, bevorzugt ≥ 0,002 Gew.-% bis etwa ≤ 15 Gew.-% oder ≥ 0,02 Gew.-% bis etwa ≤ 12 Gew.-%, basierend auf dem Gesamtgewicht der Zusammensetzung umfasst.

4. Zusammensetzung nach den Ansprüchen 1 bis 3, wobei die Zusammensetzung durch das Mischen von Folgendem erhalten wird:
i) einem Peroxidmittel; und
ii) Carbonsäuren von
- wenigstens einer Sulfocarbonsäure,
- wenigstens einer C₁- bis C₄-Carbonsäure,
- wenigstens einer C₅- bis C₁₀-Carbonsäure; mit einem Gewichtsprozentverhältnis von i) Peroxidmittel zu ii) Carbonsäuren
von etwa 1,0 : 0,15 bis 1,0 : 1,2.

5. Zusammensetzung nach den Ansprüchen 1 bis 4, wobei die Sulfoperoxycarboxylsäure eine Verbindung gemäß Formel I ist und die Sulfocarboxylsäure eine Verbindung gemäß Formel II ist:
R₁-CH (SO₃⁻X⁺) R₂-COOOH (Formel I)
R₁-CH(SO₃⁻X⁺)R₂-COOH (Formel II)
wobei:
R₁ Wasserstoff oder eine substituierte oder unsubstituierte Cₘ-Alkylgruppe, beispielsweise CH₃-(CH)₇-C=C-, bevorzugt Wasserstoff ist;
R₂ Wasserstoff oder eine substituierte oder unsubstituierte Cₙ-Alkylgruppe, beispielsweise -(CH₂)₆-, bevorzugt Wasserstoff ist;
X Wasserstoff, eine kationische Gruppe oder ein esterbildendes Molekülteil, bevorzugt Wasserstoff ist;
m 1 bis 10, bevorzugt 8 bis 10 ist;
n 1 bis 10; bevorzugt 6 bis 8 ist; und
m + n höchstens 18 ist, oder Salze oder Ester davon;
bevorzugt die Suloperoxycarbonsäure Folgendes ist:
CH₃-(CH)₇-C=C-CH (SO₃⁻X⁺)-(CH₂)₆-COOOH,
und die Sulfocarbonsäure Folgendes ist:
CH₃-(CH)₇-C=C-CH (SO₃⁻X⁺)-(CH₂)₆-COOH-

6. Zusammensetzung nach den Ansprüchen 1 bis 5, wobei die C₁- bis C₄-Percarboxylsäure Peroxyessigsäure umfasst, die C₅- bis C₁₀-Percarboxylsäure Peroxyoctansäure umfasst, die C₁- bis C₄-Carboxylsäure Essigsäure umfasst und/oder die C₅- bis C₁₀-Carboxylsäure Octansäure umfasst.

7. Zusammensetzung nach den Ansprüchen 1 bis 6, wobei das Peroxidmittel wenigstens ein Wasserstoffperoxid, ein Perborat, ein Percarbonat und Mischungen und Derivate davon und bevorzugt Wasserstoffperoxid umfasst.

8. Zusammensetzung nach den Ansprüchen 1 bis 7, wobei das Säuerungsmittel aus der Gruppe ausgewählt ist, die aus Schwefelsäure, Caprylsäure, Natriumbisulfat, Salpetersäure, Salzsäure, Methansulfonsäure, Ethansulfonsäure, Propansulfonsäure, Butansulfonsäure, Ameisensäure, Essigsäure, Halogencarboxylsäuren, Picolinsäure, Dipicolinsäure und Mischungen davon besteht, und bevorzugt Schwefelsäure ist.

9. Zusammensetzung nach den Ansprüchen 1 bis 8, wobei die Zusammensetzung wenigstens ein Hydrotrop, das aus der Gruppe ausgewählt ist, die aus einem aromatischen Kohlenwasserstoffsulfonat oder einer aromatischen Kohlenwasserstoffsulfonsäure besteht, bevorzugt Xylol-, Toluol- oder Cumolsulfonat, n-Octansulfonat und/oder Säuren davon, und bevorzugt Cumolsulfonat und/oder Cumolsulfonsäure umfasst.

10. Zusammensetzung nach den Ansprüchen 1 bis 9, wobei die Zusammensetzung wenigstens einen Builder, der aus der Gruppe ausgewählt ist, die aus einer Polyacrylsäure, einer Phosphonobutancarbonsäure, einer 1-Hydroxyethyliden-1,1-diphosphonsäure, einer Ethylendinitrilotetraessigsäure, einer Gluconsäure und/oder Salzen davon besteht und bevorzugt 1-Hydroxyethyliden-1,1-diphosphonsäure umfasst.

11. Zusammensetzung nach den Ansprüchen 1 bis 10, wobei die Zusammensetzung wenigstens ein Tensid umfasst, das aus der Gruppe ausgewählt ist, die aus einem anionischen Tensid und/oder einem nichtionischen Tensid besteht, bevorzugt wobei das Tensid aus der Gruppe ausgewählt ist, die aus linearen Alkylbenzolsulfonaten, Alkoholsulfonaten, Aminoxiden, Alkoholethoxylaten, Alkylphenolethoxylaten, Polyethylenglycolestern, EO/PO-Blockcopolymeren, Aminoxiden, Alkylbenzolsulfonaten, Natriumlaurylethersulfaten und Mischungen davon besteht und am stärksten bevorzugt wobei das Tensid aus der Gruppe ausgewählt ist, die aus Aminoxiden, Alkylbenzolsulfonaten, Natriumlaurylethersulfaten und Mischungen davon besteht.

12. Zusammensetzung nach den Ansprüchen 1 bis 11, wobei eine lagerstabile konzentrierte Zusammensetzung durch das Mischen von Folgendem erhalten wird:
- ≥ 0,5 Gew.-% bis etwa ≤ 20 Gew.-%, bevorzugt ≥ 1 Gew.-% bis etwa ≤ 15 Gew.- % und stärker bevorzugt ≥ 5 Gew.-% bis etwa ≤ 10 Gew.-%, wenigstens einer Sulfocarbonsäure, bevorzugt einer sulfatierten Ölsäure, bevorzugt einer sulfatierten Ölsäure;
- ≥ 1 Gew.-% bis etwa ≤ 15 Gew.-%, bevorzugt ≥ 3 Gew.-% bis etwa ≤ 10 Gew.-% und stärker bevorzugt ≥ 5 Gew.-% bis etwa ≤ 8 Gew.-%, einer C₁- bis C₄-Carbonsäure, bevorzugt Essigsäure;
- ≥ 0,1 Gew.-% bis etwa ≤ 10 Gew.-%, bevorzugt ≥ 0,5 Gew.-% bis etwa ≤ 5 Gew.- % und stärker bevorzugt ≥ 1 Gew.-% bis etwa ≤ 2 Gew.-%, wenigstens einer C₅-bis C₁₀-Carbonsäure, bevorzugt Octansäure;
- ≥ 1 Gew.-% bis etwa ≤ 30 Gew.-%, bevorzugt ≥ 5 Gew.-% bis etwa ≤ 15 Gew.-% und stärker bevorzugt ≥ 10 Gew.-% bis etwa ≤ 12 Gew.-%, wenigstens eines Peroxidmittels, bevorzugt Wasserstoffperoxid;
- ≥ 1 Gew.-% bis etwa ≤ 20 Gew.-%, bevorzugt ≥ 5 Gew.-% bis etwa ≤ 15 Gew.-% und stärker bevorzugt ≥ 10 Gew.-% bis etwa ≤ 12 Gew.-%, wenigstens eines Hydrotrops, bevorzugt Cumolsulfonat;
- ≥ 1 Gew.-% bis etwa ≤ 20 Gew.-%, bevorzugt ≥ 5 Gew.-% bis etwa ≤ 15 Gew.-% und stärker bevorzugt ≥ 11 Gew.-% bis etwa ≤ 12 Gew.-%, wenigstens eines Säuerungsmittels, bevorzugt Schwefelsäure;
- ≥ 0 Gew.-% bis etwa ≤ 10 Gew.-%, bevorzugt ≥ 0,5 Gew.-% bis etwa ≤ 5 Gew.- % und stärker bevorzugt ≥ 1 Gew.-% bis etwa ≤ 1,5 Gew.-%, wenigstens eines Builders, bevorzugt 1-Hydroxyethyliden-1,1-diphosphonsäure;
- ≥ 0 Gew.-% bis etwa ≤ 20 Gew.-%, bevorzugt ≥ 5 Gew.-% bis etwa ≤ 15 Gew.-% und stärker bevorzugt ≥ 10 Gew.-% bis etwa ≤ 12 Gew.-%, wenigstens eines Tensids, bevorzugt Aminoxid; und
- einem Lösungsmittel, bevorzugt Wasser, wobei die Komponenten derart ausgewählt sind, dass die Gesamtgewichtsmenge aller Komponenten der Zusammensetzung 100 Gew.-% beträgt.

13. Zusammensetzung nach den Ansprüchen 1 bis 12, wobei die konzentrierte Zusammensetzung ferner mit einem Lösungsmittel, bevorzugt mit Wasser, zu einer gebrauchsfertigen Lösung verdünnt wird.

14. Verfahren zum Entfernen von Schmutz, Bleichen und/oder Reduzieren einer Population von Organismen auf einer Oberfläche, das ein Aufbringen einer Zusammensetzung nach den Ansprüchen 1 bis 13 auf die Oberfläche umfasst.

15. Verwendung der Zusammensetzung nach den Ansprüchen 1 bis 13 in einem System eines Reinigens vor Ort (clean-in-place - CIP) oder in einem System eines Reinigens an einem anderen Ort (clean-out-of-place - COP), bevorzugt zum Reinigen und/oder Desinfizieren von Melkmaschinen.

## Revendications

1. Composition liquide, stable au stockage comprenant un mélange :
a) d'un acide sulfoperoxycarboxylique,
b) d'un acide percarboxylique en C₁ à C₄,
c) d'un acide percarboxylique en C₅ à C₁₀,
d) d'un agent peroxyde,
e) d'un hydrotrope,
f) d'un acidulant en une quantité de > 0 % en poids à ≤ 20 % en poids sur la base du poids total de la composition,
g) d'un liquide ; la composition comprenant de l'acide sulfocarboxylique libre, de l'acide carboxylique en C₁ à C₄ libre et de l'acide carboxylique en C₅ à C₁₀ libre et pouvant être obtenue en mélangeant
i) l'agent peroxyde, et ii) les acides carboxyliques d'au moins un acide sulfocarboxylique, au moins un acide carboxylique en C₁ à C₄ en une quantité de > 5 % en poids à
≤ 50 % en poids sur la base du poids total de la composition et au moins un acide carboxylique en C₅ à C₁₀ en une quantité de > 0 % en poids à ≤ 2 % en poids sur la base du poids total de la composition.

2. Composition selon la revendication 1, la composition comprenant l'acide percarboxylique en C₅ à C₁₀,de préférence l'acide peroctanoïque, en une quantité d'environ > 0 % en poids à environ ≤ 2 % en poids, de préférence ≥ 0,0001 % en poids à environ ≤ 1,2 % en poids, ou ≥ 0,001 % en poids à environ ≤ 0,8 % en poids, sur la base du poids total de la composition ; et/ou l'acide carboxylique en C₅ à C₁₀,de préférence l'acide octanoïque, en une quantité d'environ > 0 % en poids à environ ≤ 2 % en poids, de préférence ≥ 0,0001 % en poids à environ < 1,2 % en poids, ou ≥ 0,001 % en poids à environ ≤ 0,8 % en poids, sur la base du poids total de la composition ; et de préférence un mélange d'un acide percarboxylique en C₅ à C₁₀ et d'un acide carboxylique en C₅ à C₁₀,de préférence un mélange d'acide peroctanoïque et d'acide octanoïque, en une quantité d'environ > 0 % en poids à environ ≤ 2 % en poids, de préférence ≥ 0,0001 % en poids à environ ≤ 1,2 % en poids, ou > 0,001 % en poids à environ ≤ 0,8 % en poids, sur la base du poids total de la composition, et/ou la composition comprenant l'acide percarboxylique en C₁ à C₄, de préférence l'acide peracétique, en une quantité d'environ > 2,5 % en poids à environ ≤ 16,5 % en poids, de préférence ≥ 5 % en poids à environ ≤ 15 % en poids, ou ≥ 7,5 % en poids à environ ≤ 10 % en poids, sur la base du poids total de la composition ; et/ou l'acide carboxylique en C₁ à C₄, de préférence l'acide acétique, en une quantité d'environ > 5 % en poids à environ ≤ 50 % en poids, de préférence ≥ 6 % en poids à environ ≤ 20 % en poids, ou ≥ 7 % en poids à environ ≤ 15 % en poids, sur la base du poids total de la composition ; et de préférence un mélange d'un acide peracétique en C₁ à C₄ et d'un acide carboxylique en C₁ à C₄, de préférence un mélange d'acide peracétique et d'acide acétique, en une quantité d'environ > 7,5 % en poids à environ ≤ 66,5 % en poids, de préférence ≥ 11 % en poids à environ ≤ 35 % en poids, ou ≥ 14,5 % en poids à environ ≤ 25 % en poids, sur la base du poids total de la composition.

3. Composition selon la revendication 1 ou 2, la composition comprenant l'acidulant, de préférence l'acide sulfurique, en une quantité d'environ > 0 % en poids à environ ≤ 20 % en poids, de préférence ≥ 0,002 % en poids à environ ≤ 15 % en poids, ou ≥ 0,02 % en poids à environ ≤ 12 % en poids, sur la base du poids total de la composition.

4. Composition selon les revendications 1 à 3, la composition étant obtenue en mélangeant :
i) agent peroxyde ; et
ii) acides carboxyliques
- d'au moins un acide sulfocarboxylique,
- d'au moins un acide carboxylique en C₁ à C₄,
- d'au moins un acide carboxylique en C₅ à C₁₀;
au niveau d'un rapport en % en poids de i) agent peroxyde à ii) acides carboxyliques d'environ 1,0:0,15 à 1,0:1,2.

5. Composition selon les revendications 1 à 4, l'acide sulfoperoxycarboxylique étant un composé selon la formule I et l'acide sulfocarboxylique étant un composé selon la formule II :
R₁-CH (SO₃⁻X⁺)R₂-COOOH (Formule I)
R₁-CH(SO₃⁻X⁺)R₂-COOH (Formule II)
R₁ étant hydrogène, ou un groupe alkyle en Cₘ substitué ou non substitué, par exemple CH₃-(CH)₇-C=C-, de préférence hydrogène ;
R₂ étant hydrogène, ou un groupe alkyle en Cₙ substitué ou non substitué, par exemple -(CH₂)₆-, de préférence hydrogène ;
X étant hydrogène, un groupe cationique ou une fraction formatrice d'ester, de préférence hydrogène ;
m étant 1 à 10, de préférence 8 à 10 ;
n étant 1 à 10 ; de préférence 6 à 8 ; et
m + n étant inférieur ou égal à 18, ou des sels ou esters de celui-ci ;
de préférence, l'acide sulfoperoxycarboxylique étant
CH₃-(CH)₇-C=C-CH(SO₃⁻X⁺)-(CH₂)₆-COOOH,
et l'acide sulfocarboxylique étant
CH₃-(CH)₇-C=C-CH(SO₃⁻X⁺)-(CH₂)₆-COOH.

6. Composition selon les revendications 1 à 5, l'acide percarboxylique en C₁ à C₄ comprenant l'acide peroxyacétique, l'acide percarboxylique en C₅ à C₁₀ comprenant l'acide peroxyoctanoïque, l'acide carboxylique en C₁ à C₄ comprenant l'acide acétique et/ou l'acide carboxylique en C₅ à C₁₀ comprenant l'acide octanoïque.

7. Composition selon les revendications 1 à 6, l'agent peroxyde comprenant du peroxyde d'hydrogène, un perborate, un percarbonate et leurs mélanges et dérivés, et de préférence le peroxyde d'hydrogène.

8. Composition selon les revendications 1 à 7, l'acidulant étant choisi dans le groupe constitué d'acide sulfurique, d'acide caprylique, de bisulfate de sodium, d'acide nitrique, d'acide chlorhydrique, d'acide sulfonique de méthane, d'acide sulfonique d'éthane, d'acide sulfonique de propane, d'acide sulfonique de butane, d'acide formique, d'acide acétique, d'acides halogénocarboxyliques, d'acide picolinique, d'acide dipicolinique et de leurs mélanges, et de préférence d'acide sulfurique.

9. Composition selon les revendications 1 à 8, la composition comprenant au moins un hydrotrope choisi dans le groupe comprenant un sulfonate d'hydrocarbure aromatique ou un acide sulfonique d'hydrocarbure aromatique, de préférence le sulfonate de xylène, le sulfonate de toluène ou le sulfonate de cumène, le sulfonate de n-octane et/ou leurs acides, et de préférence le sulfonate de cumène et/ou l'acide sulfonique de cumène.

10. Composition selon les revendications 1 à 9, la composition comprenant au moins un adjuvant choisi dans le groupe comprenant un acide polyacrylique, un acide carboxylique phosphonobutane, un acide 1-hydroxyéthylidèn-1,1-diphosphonique, un acide éthylènedinitrilotétraacétique, un acide gluconique et/ou leurs sels et de préférence l'acide 1-hydroxyéthylidèn-1,1-diphosphonique.

11. Composition selon les revendications 1 à 10, la composition comprenant au moins un surfactant choisi dans le groupe comprenant un surfactant anionique et/ou un surfactant non ionique, de préférence le surfactant étant choisi dans le groupe comprenant des sulfonates de benzène d'alkyle linéaires, des sulfonates d'alcool, des oxydes d'amines, des éthoxylates d'alcools, des éthoxylates d'alkylphénols, des esters de polyéthylène glycol, des copolymères séquencés EO/PO, des aminoxydes, des alkylbenzènesulfonates, des lauryléthersulfates de sodium et leurs mélanges et plus préférablement le surfactant étant choisi dans le groupe comprenant les aminoxydes, les alkylbenzènesulfonates, les lauryléthersulfates de sodium et leurs mélanges.

12. Composition selon les revendications 1 à 11, une composition concentrée stable au stockage étant obtenue en mélangeant :
- ≥ 0,5 % en poids à environ ≤ 20 % en poids, de préférence ≥ 1 % en poids à environ ≤ 15 % en poids, et plus préférablement ≥ 5 % en poids à environ ≤ 10 % en poids, d'au moins un acide sulfocarboxylique, de préférence l'acide oléique sulfaté, de préférence l'acide oléique sulfaté ;
- ≥ 1 % en poids à environ ≤ 15 % en poids, de préférence ≥ 3 % en poids à environ ≤ 10 % en poids, et plus préférablement ≥ 5 % en poids à environ ≤ 8 % en poids, d'un acide carboxylique en C₁ à C₄, de préférence l'acide acétique ;
- ≥ 0,1 % en poids à environ ≤ 10 % en poids, de préférence ≥ 0,5 % en poids à environ ≤ 5 % en poids, et plus préférablement ≥ 1 % en poids à environ ≤ 2 % en poids, d'au moins un acide carboxylique en C₅ à C₁₀, de préférence l'acide octanoïque ;
- ≥ 1 % en poids à environ ≤ 30 % en poids, de préférence ≥ 5 % en poids à environ ≤ 15 % en poids, et plus préférablement ≥ 10 % en poids à environ ≤ 12 % en poids, d'au moins un agent peroxyde, de préférence le peroxyde d'hydrogène ;
- ≥ 1 % en poids à environ ≤ 20 % en poids, de préférence ≥ 5 % en poids à environ ≤ 15 % en poids, et plus préférablement ≥ 10 % en poids à environ ≤ 12 % en poids, d'au moins un hydrotrope, de préférence le sulfonate de cumène ;
- ≥ 1 % en poids à environ ≤ 20 % en poids, de préférence ≥ 5 % en poids à environ ≤ 15 % en poids, et plus préférablement ≥ 11 % en poids à environ ≤ 12 % en poids, d'au moins un acidulant, de préférence l'acide sulfurique ;
- ≥ 0 % en poids à environ ≤ 10 % en poids, de préférence ≥ 0,5 % en poids à environ ≤ 5 % en poids, et plus préférablement ≥ 1 % en poids à environ ≤ 1,5 % en poids, d'au moins un adjuvant, de préférence l'acide 1-hydroxyéthylidèn-1,1-diphosphonique ;
- ≥ 0 % en poids à environ ≤ 20 % en poids, de préférence ≥ 5 % en poids à environ ≤ 15 % en poids, et plus préférablement ≥ 10 % en poids à environ ≤ 12 % en poids, d'au moins un tensioactif, de préférence un oxyde d'amine ; et
- un solvant, de préférence de l'eau, les composants étant choisis de telle sorte que la quantité de poids total de tous les composants de la composition est de 100 % en poids.

13. Composition selon les revendications 1 à 12, la composition concentrée étant en outre diluée avec un solvant, de préférence avec de l'eau, en une solution prête à l'emploi.

14. Procédé destiné à l'élimination de salissure, au blanchissement et/ou à la réduction d'une population d'organismes sur une surface comprenant l'application sur la surface d'une composition selon les revendications 1 à 13.

15. Utilisation de la composition selon les revendications 1 à 13 dans un système de nettoyage en place (CIP) ou dans un système de nettoyage hors place (COP), de préférence pour le nettoyage et/ou la désinfection des machines à traire.
